# EUROPÄISCHE PATENTSCHRIFT

(11) **EP 0 882 200 B1**
(45) Veröffentlichungstag und Bekanntmachung des Hinweises auf die Patenterteilung: **03.05.2000**
(21) Anmeldenummer: 97903525.0
(22) Anmeldetag: 10.02.1997
(51) Int. Cl.: F24F 5/00, F24D 11/00, F28D 20/00, F24J 3/08

(54) **VERFAHREN UND VORRICHTUNG ZUM HEIZEN UND KÜHLEN VON GEBÄUDEN, SOWIE WÄRMEISOLIERENDE WANDVERKLEIDUNG**
METHOD AND DEVICE FOR HEATING AND COOLING BUILDINGS, AND A HEAT-INSULATING WALL COVERING
PROCEDE ET DISPOSITIF DE CHAUFFAGE ET DE REFROIDISSEMENT DE BATIMENTS, ET REVETEMENT DE MURS THERMO-ISOLANT

(30) Priorität: 19.02.1996 HU 9600366; 24.09.1996 HU 9602620
(43) Veröffentlichungstag der Anmeldung: 09.12.1998
(73) Patentinhaber: Greguska, Karoly, 1038 Budapest (HU)
(72) Erfinder: SUBOTICS, Gyula, H-1172 Budapest (HU)
(74) Vertreter: Viering, Jentschura & Partner
(86) Internationale Anmeldenummer: HU9700004
(87) Internationale Veröffentlichungsnummer: WO9730316

(56) Entgegenhaltungen:
- DE-A- 3 801 199
- US-A- 4 173 304
- PATENT ABSTRACTS OF JAPAN vol. 006, no. 256 (M-179), 15.Dezember 1982 & JP 57 150743 A (ADACHI JIMUSHIYO:KK), 17.September 1982,

## Beschreibung

Die Erfindung betrifft ein Verfahren zum Heizen und Kühlen von Gebäuden, wobei die in unterirdischen Schichten vorhandene Wärmeenergie genutzt wird. Die Erfindung betrifft weiterhin eine Vorrichtung zur Durchführung des Verfahrens, sowie eine wärmeisolierende Wandverkleidung insbesondere zur Ausbildung eines wärmeisolierenden Luftzirkulationssystems für eine erfindungsgemäße Vorrichtung.

Aus der technischen Literatur und der Praxis sind verschiedene Verfahren und Vorrichtungen bekannt, die zum Heizen bzw. Kühlen von Innenräumen eines Gebäudes geeignet sind.

Verschiedene Lösungen zur Nutzung der Umgebungswärme sind in Herbert Jüttemann: "Elektrisch heizen und klimatisieren" (2. neubearbeitete und erweiterte Auflage d. VDI-Taschenbuchs T36. Düsseldorf: VDI-Verlag) beschrieben. So ist zum Beispiel das Prinzip der unter Verwendung der Wärme des Erdbodens und des Bodenwassers betriebenen Wärmepumpen für Wohnhäuser beschrieben, bei welchem im wesentlichen durch einen elektrisch betriebenen Kompressorkühlkreis die im Boden befindliche freie Wärme abgezogen wird, dabei erfolgt eine Abkühlung, während die nützliche Wärme auf ein höheres Temperaturniveau erhöht zur Heizung der Innenräume von Wohnhäusern verwendet wird. Anhand von Berechnungen bezüglich der Wirtschaftlichkeit stellt das erwähnte Buch durch Vergleich mit herkömmlichen Öl- oder Gaszentralheizungen fest, daß bei Verwendung der Wärmepumpen eine Energieeinsparung bis zu 25 % erreicht werden kann. Diese Lösung wird - da die elektrische Energie in vielen westlichen Ländern und auch in Ungarn um das Vielfache teurer ist als Erdgas mit gleichem Energiegehalt - insbesondere in den Ländern verwendet, wo der elektrische Strom billiger ist.

Da der Anschaffungspreis der zum Heizen von Wohnungen entwickelten Wärmepumpen um Größenordnungen größer als der der herkömmlichen Heizeinrichtungen ist, ist nicht damit zu rechnen, daß die Investitionskosten für die Umstellung auf Heizung mit Wärmepumpe bei Wohnhäusern wiedergewonnen werden.

Prinzipiell können Wärmepumpen auch zum Kühlen von Räumen verwendet werden, was jedoch den Energieeinsparungsbestrebungen widerspricht. Außerdem ist zum Kühlen ein spezielles Verteilungssystem erforderlich, wodurch diese Lösung besonders konstenaufwendig wird.

Ferner offenbart die JP-A-57 150743 ein Verfahren zum Heizen und Kühlen von Gebäuden, wobei in unterirdischen Schichten vorhandene Wärmeenergie genutzt wird. Dieses Verfahren sieht eine direkte Zirkulation der Luft von den unterirdischen Schichten in den Innenräumen der Gebäude vor.

Die Erfindung hat sich das Ziel gesetzt, ein Heizsystem zu entwickeln, welches eine weite Verbreitung der Nutzung der geothermischen Energie für Heizzwecke dadurch ermöglicht, daß es einfach und kostengünstig herstellbar ist und unter Verwendung von geringe Servicekosten beanspruchenden Konstruktionselementen das Heizen von Innenräumen und Gebäuden ermöglicht, wobei das System im Sommer auch die Kühlung der Innenräume sichern soll und dabei die Betriebskosten auf cca. 10 % der Betriebskosten der herkömmlichen Heiz- und Kühlungssysteme verringert werden können. Eine weitere Zielstellung betrifft die Entwicklung einer wärmeisolierenden Verkleidung, die vorzugsweise zur Ausbildung der erfindungsgemäßen Vorrichtung verwendet werden kann.

Die Erfindung beruht auf der Erkenntnis, daß die Verbrennungsmenge, der zum Heizen von Innenräumen eines Gebäudes erforderlichen Energieträger wesentlich verringert werden kann, wenn die Außenwände sowie die die ungeheizten Räume begrenzenden Wände sowie die mit der Außenumgebung oder dem Bodenraum (Dachraum) benachbarten Wände mit einem wärmeisolierenden Luftzirkulationssystem abdegeckt sind, in welchem eine Zirkulation der durch geothermische Wärmeenergie vorzugsweise auf 12-15 °C erwärmten Luft mit geringstem Energieverlust möglich ist. Dazu müssen mindestens drei Bedingungen erfüllt werden:
1) Der Luftspalt, in welchem die durch geothermische Energie erwärmte Luft strömt, ist von der Außenwand des Gebäudes so gut wie möglich zu isolieren, um die sich aus der Wärmeübertragung ergebenden Verluste auf ein Minimum zu reduzieren.
2) Die erwärmte Luft muß in dem Luftspalt mit entsprechender Geschwindigkeit zirkulieren, damit die Temperaturschwankungen der Luft auf ein Minimum reduziert werden können.
3) In der Erde ist eine Bohrung, eventuell ein unterirdischer Schacht oder Keller auszubilden welche mit dem in dem wärmeisolierenden Luftzirkulationssystem ausgebildeten Luftspalt (Luftkanal) einen geschlossenen Raum bildend verbunden sind, wobei die darin strömende Luft ihren Energieverlust durch die in der Erde zugängliche geothermische Energie kontinuierlich ersetzen kann.

Sind diese Bedingungen erfüllt, so kann das zu heizende Gebäude als vollkommen in den Erdboden abgesenkt betrachtet werden, d.h. daß die Lufttemperatur der Innenräume unabhängig von den Wetteränderungen der Außenumgebung einen Wert von cca. 10-12 °C beibehält. Die erforderliche Energiezuführung für diese Lufttemperatur beträgt bei einem Gebäude mit einem Wohnraum von 500-600 m³ etwa 80-100 W/h, diese Energiemenge ist zum kontinuierlichen Betrieb eines die Luftströmung sichernden Ventilators erforderlich.

Es wurde weiterhin erkannt, daß die Temperatur der Innenräume mit minimalstem Zusatzenergieaufwand zum Beispiel auf 20 °C erhöht werden kann, wenn
a) die Innenräume mit Zusatzheizkörpern versehen werden oder die Wärmeenergie aus unterirdischen Schichten aus einer solchen Tiefe hochgeleitet wird, in welcher die Temperatur bereits den gewünschten Wert hat,
b) der in dem wärmeisolierenden Luftzirkulationssystem ausgebildete Luftspalt entlang der mit dem Luftraum des Innenraums in Kontakt stehenden Flächen entsprechend isoliert ist, um zu sichern, daß von der durch die Zusatzheizkörper in den Luftraum geleiteten Wärmemenge so wenig wie möglich zur weiteren Erhöhung der in der im Luftspalt zirkulierenden Luft enthaltenen Wärmemenge verwendet wird, welche letzlich in die Erde geratend verloren gehen würde.

Es wurde weiterhin erkannt, daß bei Verwendung des wärmeisolierenden Luftzirkulationssystems in der warmen Jahreszeit die Kühlung der Innenräume der Gebäude mit der gleichen Vorrichtung vorgenommen werden kann, und zwar dadurch, daß in dem Luftspalt des wärmeisolierenden Luftzirkulationssystems eine ständige Strömung der eine Temperatur von 12-15 °C (Erdewärme) aufweisenden Luft aufrechterhalten wird. Das so durchgeführte Kühlen ist allen bekannten Lösungen gegenüber energiesparend und hat den weiteren Vorteil, daß es außer dem ansonsten auch erforderlichen Heizsystem keine anderen Vorrichtungen beansprucht.

Zur Lösung der Aufgabe wurde ein Verfahren zum Heizen und Kühlen von Gebäuden geschaffen, bei welchem gemäß der Erfindung während des Heizens bzw. Kühlens mindestens in dem Luftkanal eines wärmeisolierenden Luftzirkulationssystems - das vorzugsweise mit einem inneren wärmeisolierenden Luftspalt, einem Luftkanal und einem äußeren wärmeisolierenden Luftspalt versehen ist und die die Außenumgebung und andere ungeheizte Räume begrenzenden Wände und Deckenteile des zu heizenden/kühlenden Raumes vom Inneren des Raumes her abdeckt - eine Zirkulation der durch geothermische Wärmeenergie erwärmten und aus den unterirdischen Schichten zugeleiteten Luft erzeugt wird, während die äußere Umgebungstemperatur mittels eines außerhalb des Gebäudes angebrachten Temperaturreglers kontinuierlich erfaßt wird und bei Erfüllung der Bedingung t₁ ≤ tₖ - 1 °C - wobei t₁ die Temperatur der im Luftkanal zirkulierenden Luft ist - während des Heizens die Luftzirkulation mit Hilfe des Temperaturreglers unterbrochen wird und eine eventuell erforderliche weitere Aufheizung des Innenraumes auf eine gewünschte Temperatur mit Hilfe von dem Raum vorzugsweise zugeordneten zusätzlichen Heizkörpern gesichert wird, während des Kühlens des Raumes dagegen die Zirkulation der durch geothermische Wärmeenergie auf einem bestimmten Temperaturwert gehaltenen Luft in dem Luftkanal in Gang gesetzt wird, wenn die mittels eines in dem Raum angeordneten Temperaturreglers kontinuierlich erfaßte Temperatur einen bestimmten Wert überschreitet, während die Luftzirkulation unterbrochen wird, wenn die erfaßte Temperatur des Raumes unter einen bestimmten Wert abfällt.

Es ist zweckmäßig, wenn die durch geothermische Wärmeenergie erwärmte Luft aus einer unter dem Gebäude in der Erde ausgebildeten Bohrung oder aus einem in der Basis des Kellers des Gebäudes oder unter dem Boden des Gebäudes angeordneten Wärmetauscher über ein Saugrohr und Druckrohr in den Luftkanal geleitet wird und zwar beim Heizen über den von dem Boden gemessenen höchstgelegenen Teil des Luftkanals eingeleitet und dessen tiefstgelegenen Teil in das Saugrohr zurückgeleitet wird, während beim Kühlen die Luft über den vom Boden gemessenen tiefstgelegenen Teil des Luftkanals eingeleitet und über dessen höchstgelegenen Teil abgesaugt wird. Diese Verfahrensweise sichert einen besonders guten Wirkungsgrad.

Bei der in der Sommerzeit erfolgenden Kühlung der Innenräume des Gebäudes ist es zweckmäßig, wenn zum Kühlen eine den geringsten Wärmeinhalt aufweisende Luftmenge durch das System strömt, was dadurch erreicht wird, daß beim Kühlen des Raumes in einer Bohrung, deren Tiefe 300 m überschreitet, in einer bestimmten Tiefe vorzugsweise in einer Tiefe von 100-200 m die Richtung der in dem Druckrohr strömenden Luft geändert wird und so die rückströmende Luft erneut in das Saugrohr geleitet wird.

Soll das Heizen der Innenräume von Gebäuden ohne Anwendung von zusätzlichen Heizkörpern erfolgen, so ist es zweckmäßig, wenn die die geothermische Wärmeenergie aufweisende Luft aus den unterirdischen Schichten aus einer Tiefe von vorzugsweise mehr als 400 m in den Luftkanal geleitet wird. Dadurch kann die Grundtemperatur des zu heizenden Innenraums vorzugsweise auf 20 °C erhöht werden.

Bei der Verwendung von zusätzlichen Heizkörpern kann ein energiesparendes Heizen dadurch gesichert werden, daß die zusätzlichen Heizkörper nur dann betrieben werden, wenn sich eine Person in dem entsprechenden Raum aufhält. So ist es also zweckmäßig, wenn mittels in den einzelnen Räumen des Gebäudes angeordneter Bewegungssensoren - vorzugsweise Infrabewegungssensoren - das Betreten des jeweiligen Raumes durch eine Person bzw. deren Aufenthalt in dem Raum oder das Verlassen des Raumes erfaßt werden und im Falle des Betretens oder Aufenthaltes über eine Reglereinheit der dem Raum zugeordnete Heizkörper automatisch eingeschaltet wird, bzw. bei Verlassen des Raumes ausgeschaltet wird.

Es ist vorteilhaft, daß während des Kühlens des Raumes durch Betätigung eines Umlenkventils der Luftstrom in den inneren wärmeisolierenden Luftspalt des wärmeisolierenden Luftzirkulationssystems geleitet wird.

Zur Lösung der Aufgabe dient weiterhin eine Vorrichtung zum Heizen bzw. Kühlen von Gebäuden, bei welcher gemäß der Erfindung die die Außenumgebung begrenzenden Außenwände, die ungeheizte Räume und die Außenumgebung begrenzenden Wände und Deckenteile der zu heizenden/kühlenden Räume des Gebäudes auf der zum Innern des jeweiligen Raumes weisenden Seite mit einem wärmeisolierenden Luftzirkulationssystem bedeckt sind, das vorzugsweise aus einer dreifachen Kunststoffplatte besteht und mit einem inneren wärmeisolierenden Luftspalt, einem Luftkanal und einem äußeren wärmeisolierenden Luftspalt, die aufeinander aufgebaut sind, versehen ist, wobei vorzugsweise der in der Mitte befindliche Luftkanal über ein mit Saugrohr und Druckrohr versehenes Rohrleitungssystem mit einer in der Erde ausgebildeten Bohrung oder einem in der Basis des Kellers des Gebäudes oder unter dem Boden des Gebäudes angeordneten Wärmetauscher - einen zusammenhängenden geschlossenen Raum bildend - verbunden ist, wobei der zusammenhängende geschlossene Raum mit durch geothermische Wärmeenergie aufgewärmtem Gas vorzugsweise Luft gefüllt ist und in dem Rohrleitungssystem mindestens ein Ventilator eingebaut ist, welcher mit einem mindestens in einem geheizten oder gekühlten Innenraum angebrachten - vorzugsweise auch zusätzliche Heizkörper betätigenden - Temperaturregler sowie mit einem außerhalb des Gebäudes angeordneten Temperaturregler in Funktionsverbindung steht.

Es ist vorteilhaft, wenn im Falle einer Außenwand bzw. Decke mit einer den Wert von 0,5 W/m²K überschreitenden Wärmedurchgangszahl zwischen der Außenwand bzw. der Decke und dem äußeren wärmeisolierenden Luftspalt eine vorzugsweise mindestens 5 mm starke Wärmeisolierung aus gut wärmeisolierendem Material zum Beispiel Polystyrolschaum angeordnet ist, während im Falle einer Außenwand bzw. Decke mit einer den Wert von 1,0 W/m²K überschreitenden Wärmedurchgangszahl auf den zur Außenwand gerichteten Seiten der den äußeren wärmeisolierenden Luftspalt begrenzenden Flächen vorzugsweise eine jeweils mindestens 5 mm starke Wärmeisolierung aus gut wärmeisolierendem Material, zum Beispiel Polystyrolschaum angeordnet ist, desweiteren im Falle einer Bohrung mit einer Tiefe von mehr als 200 m vorzugsweise auf mindestens einer Seite der den inneren wärmeisolierenden Luftspalt begrenzenden Kunststoffplatten eine mindestens jeweils 5 mm starke Wärmeisolierung aus gut wärmeisolierendem Material zum Beispiel Polystyrolschaum angeordnet ist.

Es ist weiterhin zweckmäßig, wenn in einer mehr als 300 m tief in die Erde reichenden Bohrung das innerhalb des Druckrohres angeordnete Saugrohr an seinem Ende mit mindestens einer unteren Luftüberströmöffnung, an dem Mittelteil seiner gesamten Tiefe dagegen mit mindestens einer oberen Luftüberströmöffnung versehen ist, desweiteren ein manuell betätigbares Reglerorgan vorgesehen ist, welches den Richtungswechsel der in dem Druckrohr strömenden Luft in der dem Mittelteil entsprechenden Tiefe durch gemeinsames Bewegen eines Stopfens, der zum Abschließen einer Luftüberströmöffnung dient und mit Schwerstücken versehen ist, und einer an einem gemeinsamen Draht befestigten Luftumlenkhülse mit Hilfe eines in eine untere Nut bzw. obere Nut einrastbaren drahtbefestigenden Riegels ermöglicht.

Zur Lösung der Aufgabe wurde weiterhin eine wärmeisolierende Wandverkleidung zur Ausbildung eines wärmeisolierenden Luftzirkulationssystems für eine erfindungsgemäße Vorrichtung entwickelt, wobei diese wärmeisolierende Wandverkleidung aus aneinander anfügbaren Elementen besteht und gemäß der Erfindung parkettartig aneinander fügbare - vorzugsweise aus Kunststoff bestehende - Wandverkleidungselemente mit der Oberfläche der zu isolierenden Wand angepaßter Form vorgesehen sind, welche mit einem einen zur Luftzirkulation geeigneten Luftkanal bildenden Hohlraum, gegebenfalls mit mindestens einem, zwischen dem Luftkanal und der zu verkleidenden Wand ausgebildeten äußeren Luftspalt sowie gegebenenfalls mit mindestens einem inneren wärmeisolierenden Luftspalt, der sich auf der dem äußeren Luftspalt gegenüberliegenden Seite des Luftkanals befindet, versehen sind und an der zu isolierenden Wand vorzugsweise von innen befestigt sind.

Es ist zweckmäßig, daß die Wandverkleidungselemente über eine Feder - Nut - Verbindung aneinander gefügt sind.

Es ist weiterhin vorteilhaft, wenn mindestens die zur zu isolierenden Wand gerichtete Seite der aus Kunststoff bestehenden Wandverkleidungselemente mit einer Metallschicht überzogen sind.

Es ist vorteilhaft, wenn das Ende des Druckrohrs, welches in der in der Erde ausgebildeten Bohrung angeordnet ist, und das Ende des Saugrohres, welches im Innern des Druckrohres angeordnet ist, mit einer gemeinsamen Bodenplatte versehen sind, desweiteren das Saugrohr mit mindestens einer unteren Luftüberströmöffnung versehen ist, wobei das Saugrohr über eine Ausführöffnung, die in dem sich innerhalb des Gebäudes befindenden Abschnitt des Druckrohres ausgebildet ist, aus dem Innern des Druckrohres herausgeführt ist.

Durchgeführte Messungen haben ergeben, daß im Falle eines mit dem erfindungsgemäßen wärmeisolierenden Luftzirkulationssystem versehenen Gebäudes mit einem Wohnraum von cca. 560 m³ bei Verwendung einer zusätzlichen Warmwasser-Zentralheizung, die mit einem mit einer Pumpe versehenen Gasheizgerät vom Typ C24 der Firma FÉGTHERM Gázkészülékgyártó Rt. betrieben wurde, bei einer durchschnittlichen Außentemperatur von -10 °C zur Aufrechterhaltung einer Temperatur von 20 °C in den Innenräumen über eine Zeitdauer von 24 Stunden eine Erdgasmenge von 7 m³ erforderlich ist, während zur Sicherung ähnlicher Temperaturbedingungen in dem gleichen Gebäude ohne Anwendung des erfindungsgemäßen wärmeisolierenden Luftzirkulationssystems 40 m³ Erdgas zu verbrennen sind, das bedeutet, daß unter Verwendung des wärmeisolierenden Luftzirkulationssystems der Erdgasverbrauch auf 17,5 % verringert werden kann.

Nachstehend wird die Erfindung anhand von vorteilhaften Ausführungsbeispielen unter Bezugnahme auf die beigefügte Zeichnung näher erläutert. In der Zeichnung zeigen
- Fig. 1: eine Ausführungsform einer einem zweigeschossigen Familienhaus zugeordneten Vorrichtung nach der Erfindung,
- Fig. 2: eine Draufsicht des Erdgeschosses des Familienhauses nach Fig. 1,
- Fig. 3: eine Draufsicht des Dachausbaus des Familienhauses nach Fig. 1,
- Fig. 4: einen Schnitt durch ein mit Wärmeisolierungen versehenes Saug- und Druckrohr, welche in einer Bohrung in der Erde angeordnet sind,
- Fig. 5: einen Schnitt eines mittels einer Luftumlenkhülse, die obere Luftüberströmöffnungen abdeckt, geschlossenen und in einer mehr als 300 m tiefen Bohrung in der Erde angeordneten Saugrohres und damit verbundenen Reglerorgans sowie eines Druckrohrs,
- Fig. 6: schematisch den die unteren Luftüberströmöffnungen abschließenden Stopfen und das daran angeschlossene Reglerorgan gemäß Fig. 5,
- Fig. 7: schematisch das die Fläche der Außenwand abdeckende wärmeisolierende Luftzirkulationssystem im Schnitt,
- Fig. 8: Diagramme des durchschnittlichen Tagesgasverbrauchs beim Heizen des Familienhauses gemäß Fig. 1,
- Fig. 9: eine weitere Ausführungsform einer erfindungsgemäßen Vorrichtung für ein zweigeschossiges Familienhaus,
- Fig. 10: eine weitere Ausführungsform einer erfindungsgemäßen Vorrichtung für ein zweigeschossiges Familienhaus.
- Fig. 11: ein mit einem inneren und äußeren luftisolierenden Luftspalt und einem Luftkanal versehenes mittleres Wandverkleidungselement aus Kunststoff in Unteransicht,
- Fig. 12: eine Vorderansicht eines Wandverkleidungselement nach Fig. 11,
- Fig. 13: eine linksseitige Ansicht eines Wandverkleidungselementes nach Fig. 11,
- Fig. 14: einen Schnitt A-A eines Wandverkleidungselementes nach Fig. 11,
- Fig. 15: eine Draufsicht von zwei an eine Wand angepaßten ineinandergefügten aus Kunststoff bestehenden Wandverkleidungselementen und einem Endabschlußelement.
- Fig. 16: eine Seitenansicht von zwei an eine Wand angepaßten ineinandergefügten aus Kunststoff bestehenden Wandverkleidungselementen und einem Endabschlußelement,
- Fig. 17: eine axionometrische Ansicht eines aus Kunststoff hergestellten mit einem inneren und einem äußeren wärmeisolierenden Luftspalt und einem Luftkanal versehenen Wandverkleidungselementes,
- Fig. 18: eine axionometrische Ansicht eines genuteten wandverkleidenden Endabschlußelementes,
- Fig. 19: eine axionometrische Ansicht eines gefederten wandverkleidenden Endabschlußelementes,
- Fig. 20: eine axionometrische Ansicht eines aus Kunststoff hergestellten wandverkleidenden Eckelementes.

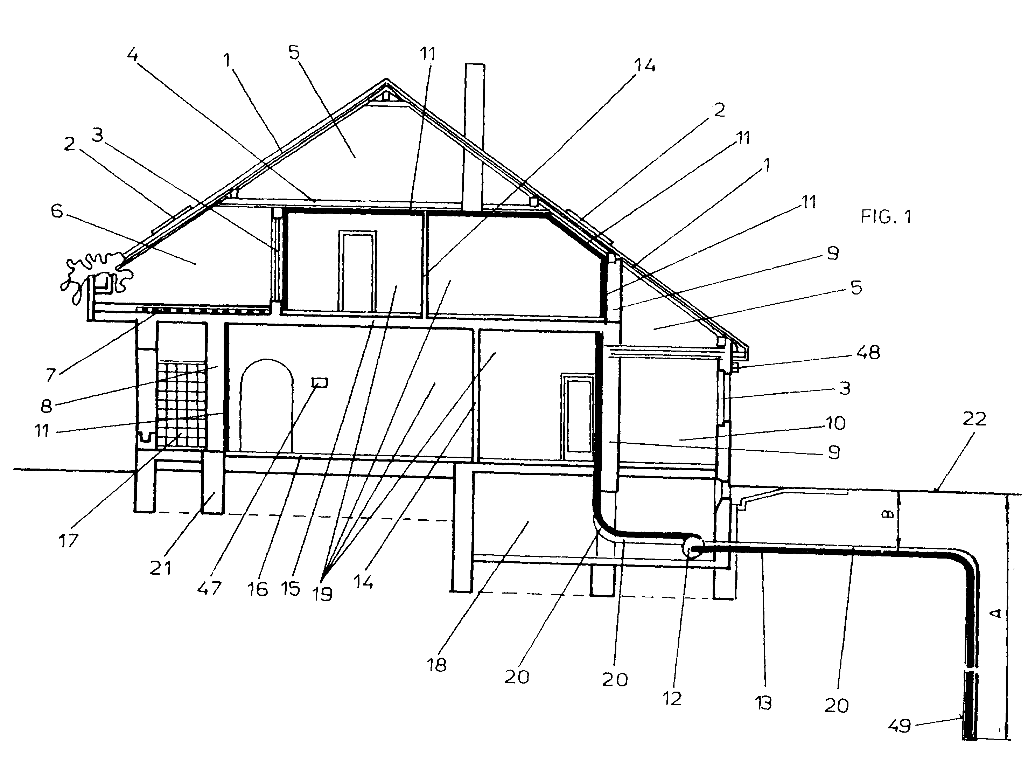

Fig. 1 zeigt ein halbunterkellertes Familienhaus mit Dachausbau, wobei das Erdgeschoß aus durch eine Eingangstür 17 und aus Hohlziegeln aufgebaute Außenwände 8 sowie eine ungeheizte Räume begrenzende ebenfalls aus Ziegelsteinen bestehende Wand 9 begrenzten Innenräumen sowie einer Garage 10 besteht. Die im Erdgeschoß befindlichen Innenräume 19 sind mit einem durch Keramikplatten abgedeckten Boden 16 versehen. Der unter dem Dach 1 des Familienhauses befindliche Dachausbau enthält ebenfalls Innenräume 19, die von oben durch eine Decke 4 bzw. einen Bodenraum 5 begrenzt sind. Die im Erdgeschloß und im Obergeschoß befindlichen Innenräume 19 sind voneinander durch eine Decke 15, die beiderseitig geheizte Räume begrenzt, voneinander getrennt. Zwischen den nebeneinander befindlichen Innenräumen 19 sind Innenwände 14, die aus Ziegelsteinen bestehen, angeordnet. Derjenige Deckenteil der im Obergeschoß befindlichen Terasse 6, welcher sich über den im Erdgeschoß befindlichen Innenräumen 19 befindet, ist mit einer Wärmeisolierung 7 versehen. Die im Erdgeschoß und im Obergeschoß befindlichen Räume sind mit Fenstern 3 bzw. die im Dachraum ausgebildeten Innenräume 19 mit Dachfenstern 2 ausgestattet.

Für das Heizen des Familienhauses im Winter bzw. dessen Kühlen im Sommer sorgt ein wärmeisolierendes Luftzirkulationssystem 11, welches über ein Saugrohr 13, ein Druckrohr 20 und einen in dem Keller 18 angeordneten Ventilator 12 mit einer Bohrung 49 in Verbindung ist, welche unter der Erdoberfläche 22 in der Erde ausgebildet ist. Um den Wärmenverlust zu verringern, ist es zweckmäßig, das Saugrohr 13 und das Druckrohr 20 unter dem Fundament 21 in einer Tiefe B, die mehr als 1,5 m beträgt, in das Familienhaus einzuführen. Die in der Erde ausgebildete Bohrung 49 hat im Idealfall eine Tiefe A von 50 bis 100 m.

Für das Ein-/Ausschalten des Ventilators 12 in der Winterheizperiode sorgt ein an die Außenwand 8 des Familienhauses angebrachter und zur Erfassung der Außentemperatur geeigneter Temperaturregler 48, während in der Sommerperiode zum Zwecke des Kühlens ein in dem zu heizenden Raum angeordneter Temperaturregler 47 dafür sorgt.

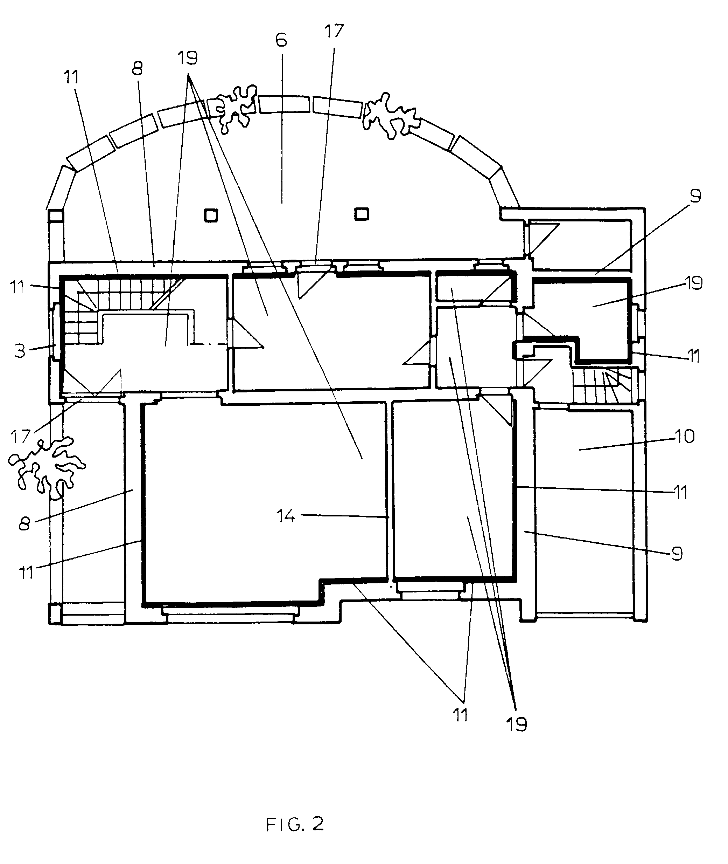

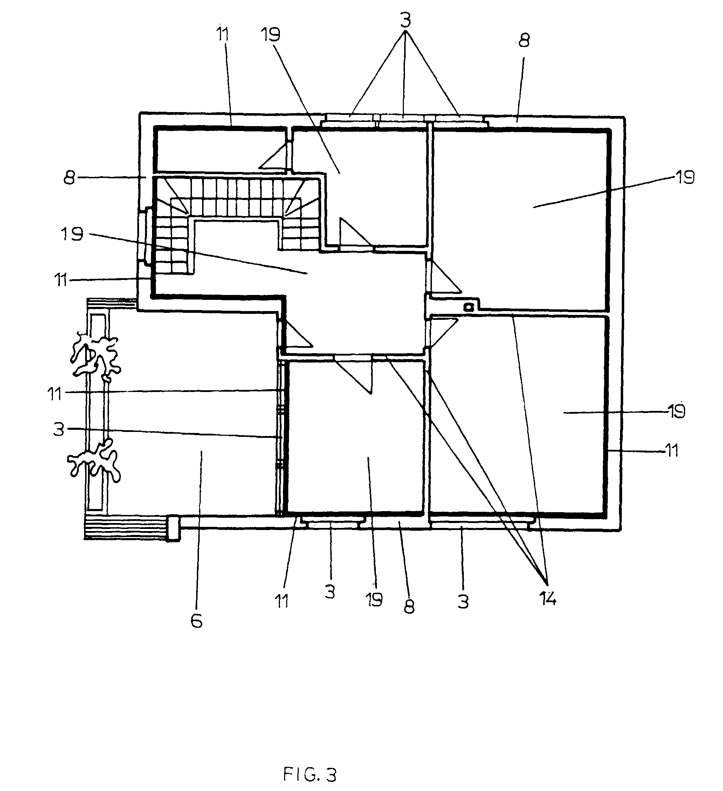

Fig. 2 zeigt die Einteilung des Erdgeschosses des Familienhauses nach Fig. 1, während Fig. 3 die Einteilung des Dachraumes näher veranschaulicht. Bei gemeinsamer Betrachtung der Figuren 1, 2 und 3 ist das Wesen der Anordnung des wärmeisolierenden Luftzirkulationssystems 11 gut erkennbar, und zwar ist die die Außenumgebung bzw. die ungeheizten Räume wie z.B. den Bodenraum 5 oder die Garage 10 begrenzende gesamte Wandfläche der Innenräume 19 des gesamten Hauses - mit Ausnahme der Fenster und Türen - sowie die den Luftraum der Innenräume 19 begrenzende gesamte Fläche des Deckenteils von dem wärmeisolierenden Luftzirkulationssystem bedeckt. Dadurch wird eine in energetischer Hinsicht ähnliche Wirkung erreicht, als wäre das ganze Haus in die Erde versenkt, ohne daß mit den ungünstigen Aspekten der zuletzt genannten Lösung gerechnet werden müßte, wie z.B. die Erhöhung der Ausführungskosten oder z.B. die in biologischer Hinsicht schädlichen Auswirkungen des Mangels an natürlicher Beleuchtung.

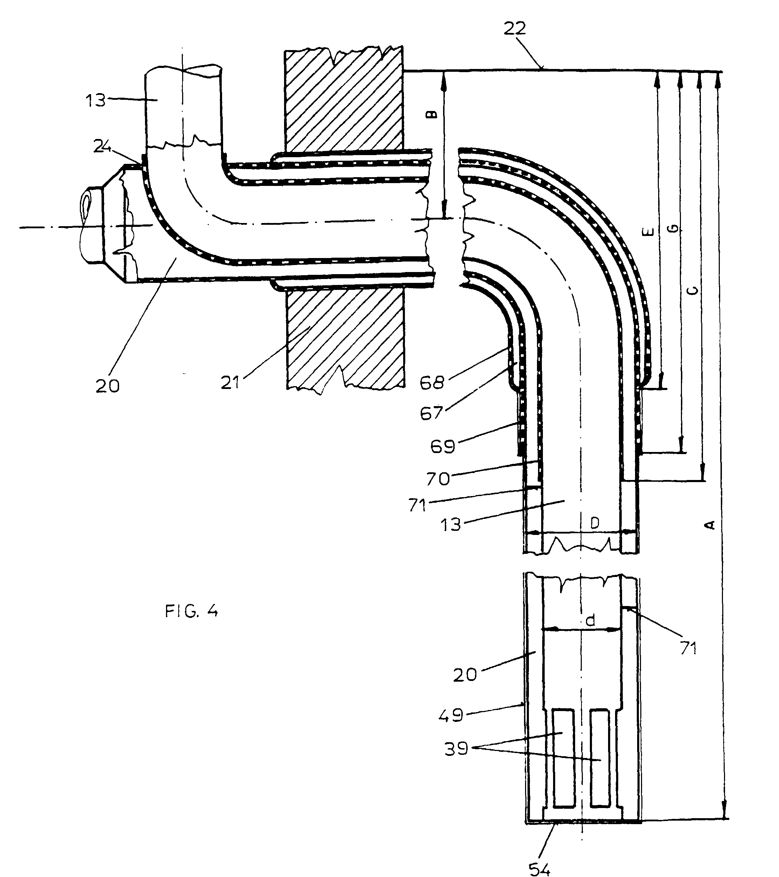

In Fig. 4 sind die in der Erde ausgebildete Bohrung 49, das darin angeordnete Saugrohr 13 und das Druckrohr 20 zu sehen, wobei die Tiefe A der Bohrung 49 im Idealfall in einem Bereich von 50 bis 100 m liegt. Das ist deshalb die idealste Tiefe, weil man auf eine solche Tiefe mit verhältnismäßig wenig Kosten bohren kann und in Rohren mit derartiger Länge der Luftzirkulation ein geringer Luftwiderstand entgegensteht, wodurch ein mit geringer Energieaufnahme - 50-100 W/h - betreibbarer Ventilator 12 in das System eingebaut werden kann, während bei der Heizung der Innenräume des Gebäudes eine bedeutende Energieeinsparung von mehr als 80 % erreicht werden kann. Das heißt, in diesem Fall kann mit geringen Investitions- und Betriebskosten eine bedeutende Energieeinsparung erreicht werden. Im Falle einer Bohrung in größere Tiefe ändern sich natürlich die Kostenverhältnisse, da die Investitionskosten wesentlich ansteigen, während die Anstiege der Einsparungen bezogen als die Bohrungstiefe von 50 bis 100 m geringer werden.

Als Druckrohr 20 und Saugrohr 13, welche in der Bohrung 49 angeordnet sind, können handelsübliche PVC-Rohre mit Durchmessern von d = 160-200 mm, D = 220-280 mm verwendet werden. Das Ende des in die Bohrung 49 eingebrachten bzw. in der Erde vorzugsweise in einer Tiefe von mehr als 1,5 m verlegten Druckrohres 20 und das Ende des in dem Druckrohr 20 konzentrisch angeordneten Saugrohrs 13 sind von einer gemeinsamen Bodenplatte 54 abgeschlossen. An dem über der Bodenplatte 54 befindlichen Teil des Saugrohrs 13 ist/sind eine oder mehrere untere Luftüberströmöffnung(en) 39 ausgebildet. Es ist zweckmäßig, wenn das Druckrohr 20 in einer Bodentiefe E unter 2 m mit einer Umhüllung umgeben ist, die einen inneren wärmeisolierenden Luftspalt 67 aufweist. Diese Umhüllung kann ebenfalls von einem PVC-Rohr gebildet sein, welches zur Verringerung des Wärmeverlustes vorzugsweise mit einer Wärmeisolierung 68 z.B. einer Umhüllung aus Polyurethanschaum mit geschlossenen Zellen, versehen ist. Darüber hinaus ist es zum Zwecke der besseren Wärmeisolation vorteilhaft, das Druckrohr 20 bis zu einer Tiefe G, die unter 3 m liegt, ebenfalls mit einer Wärmeisolation 69 zu versehen, diese kann ebenfalls aus Polyurethanschaum mit geschlossenen Zellen gefertigt werden. Letzlich ist es zweckmäßig, bis zu einer Tiefe C, die kleiner als 5 m ist, das Saugrohr 13 mit einer Wärmeisolierung 70 zu versehen, wodurch die Energieverluste weiter verringert werden können

Es ist zweckmäßig, das Saugrohr 13 bereits innerhalb des Gebäudes aus dem Druckrohr 20 über eine in der Wand des Druckrohrs 20 ausgebildete Öffnung 24 herauszuführen.

Die konzentrische Anordnung des Saugrohrs 13 und des Druckrohrs 20 kann durch Einbau von Abstandhaltern 71 gesichert werden.

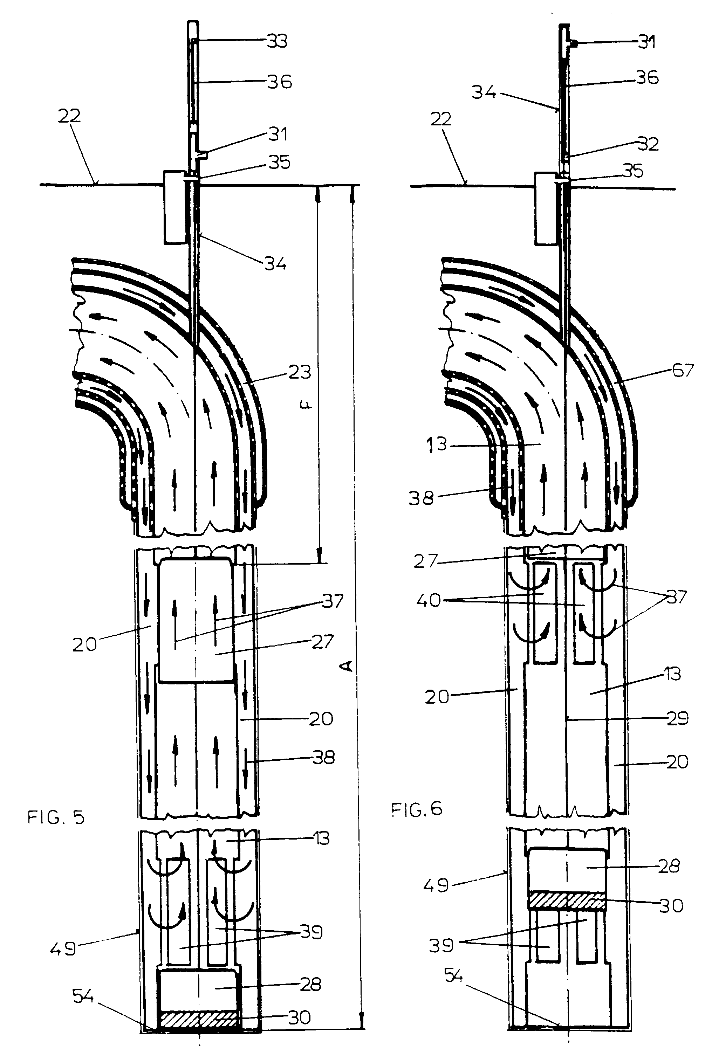

In den Figuren 5 und 6 sind eine in der Erde bis zu einer Tiefe A von mehr als 300 m ausgebildete Bohrung 49 sowie das darin angeordnete Druckrohr 20 und Saugrohr 13 sowie eine Lösung zum Schließen bestimmter Luftüberströmöffnungen bzw. zum Öffnen anderer Luftüberströmöffnungen dargestellt, deren Anwendung vorteilhaft sein kann, wenn z.B. in der Sommerzeit eine Umstellung von Heizen auf Kühlen des Gebäudes bzw. in der Winterzeit eine Umstellung von Kühlen auf Heizen des Gebäudes erfolgen soll. Bei dieser Lösung sind zum Zwecke der Umstellung auf Kühlen bzw. Heizen neben den unteren Luftüberströmöffnungen 39 vorzugsweise in einer Tiefe F in dem Saugrohr 13 auch obere Luftüberströmöffnungen 40 ausgebildet, wobei vorzugsweise F = A/2. In dem Inneren des Saugrohrs 13 sind - bewegbar an einem Draht 29 befestigt - eine Luftumlenkhülse 27 und ein zum Schließen der Luftüberströmöffnung dienender Stopfen 28 eingebaut, in dessen unteren Teil ein aus Schwermetall, z.B. Blei, gefertigtes Schwerestück 31 eingebaut ist. Der die Luftüberströmöffnung schließende Stopfen 28 und die Luftumlenkhülse 27 sind an dem Draht 29 in einer solchen Entfernung voneinander angeordnet, die ermöglicht, daß wenn die Luftumlenkhülse 27 gerade die obere Luftüberströmöffnung 40 (Luftüberströmöffnungen) schließt, der die Luftüberströmöffnung schließende Stopfen 28 noch die untere Luftüberströmöffnung(en) 39 frei läßt - s. Fig. 5 - bzw. wenn die Luftumlenkhülse 27 die obere Luftüberströmöffnung(en) 40 frei hält, der die Luftüberströmöffnung schließende Stopfen 28 die untere Luftüberströmöffnung(en) 39 schließt, s. Fig. 6. Die bei der Umstellung vom Heizbetrieb auf den Kühlbetrieb erforderlich werdende Bewegung der Luftumlenkhülse 27 und des die Luftüberströmöffnung schließenden Stopfens 28 erfolgt mittels eines an dem Ende des in dem Rohr 34 bewegbaren Drahtes 29 befestigten den Draht festhaltenden Riegels 31. Bei der Umstellung auf Heizregim wird der Riegel 31 in einer in dem unteren Teil eines in dem Rohr 34 ausgebildeten Einschnittes 36 angeordneten unteren Nut 32 verdreht befestigt. Bei Umstellung auf Heizbetrieb dagegen erfolgt die Befestigung des drahtfesthaltenden Riegels 31 durch Heben des Riegels 31 entlang des Einschnitts 36 und Verdrehen dessen in eine obere Nut 33.

Das Rohr 34 ist gegen Fortbewegung durch eine Rohrabstützung 35 geschützt. Das Schwerstück 30 hält den Draht 29 in ständiger Spannung. Wie aus den Figuren 5 und 6 ersichtlich ist, kann mit der dargestellten Lösung gesichert werden, daß im Falle des Heizens die in dem Druckrohr strömende Luft 38 an der unteren Luftüberströmöffnung 39 umkehrend als rückströmende Luft 37 in das Saugrohr 13 gelangt bzw. im Falle des Kühlens kann die im Druckrohr strömende Luft 38 über die obere Luftüberströmöffnung 40 in das Saugrohr 13 zurückströmen.

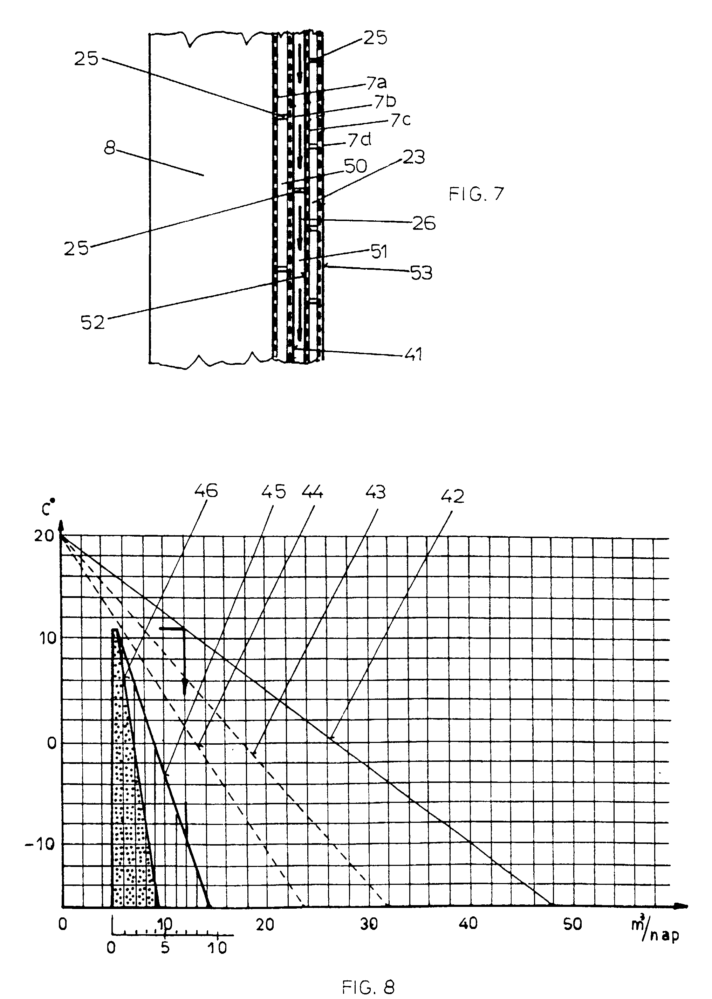

Ein prinzipielles Schema eines wärmeisolierenden Luftzirkulationssystems 11, das die Innenfläche der aus Vollziegel bestehenden und eine große Wärmeleitfähigkeit aufweisenden Außenwand 8 bedeckt, ist in Fig. 7 dargestellt. Die Innenfläche der Außenwand 8 ist mit einer Wärmeisolierung 7a versehen, die zum Beispiel aus einer Polystyrolschaumplatte oder einer Polyurethanschaumplatte bestehen kann. In einem mittels Abstandhalter 25 bestimmten Abstand von der Wärmeisolierung 7a ist - einen äußeren wärmeisolierenden Luftspalt 50 bildend - eine mit einer - auf der den äußeren wärmeisolierenden Luftspalt 50 begrenzenden Seite angeordneten - Wärmeisolierung 7b versehene Kunststoffplatte 41 angeordnet, während in einem durch Abstandhalter 25 bestimmten Abstand von der Kunststoffplatte 41 - einen Luftkanal 51 bildend - eine Kunststoffplatte 52 angeordnet ist, die ebenfalls mit einer auf der dem Luftkanal 51 entgegengesetzten Seite der Kunststoffplatte 41 angeordneten Wärmeisolierung 7c versehen ist. Dadurch kann gesichert werden, daß der Luftstrom 26 in dem zwischen den glatten Oberflächen der Kunststoffplatten 52, 51 ausgebildeten Luftkanal 51 zur Kompensierung der durch den in der Winterzeit aufkommenden intensiveren Wärmetausch erhöhten Wärmeabgabe bei geringstem Luftwiderstand mit größter Geschwindigkeit strömen kann. In einem durch die Abstandhalter 25 bestimmten Abstand von der Kunststoffplatte 52 ist - einen inneren wärmeisolierenden Luftspalt 23 bildend - eine Kunststoffplatte 53 befestigt, die auf ihrer zur Außenwand 8 weisenden Seite mit einer Wärmeisolierung 7d versehen ist.

Im allgemeinen sorgt der in dem Luftkanal 51 zirkulierende Luftstrom 26 für die Heizung bzw. Kühlung, davon kann man jedoch auch zweckmäßigerweise abweichen, zum Beispiel wenn eine intensivere Kühlung beansprucht wird, ist es zweckmäßig, den Luftstrom 26 in den inneren wärmeisolierenden Luftspalt 23 zu leiten. Durch die gröbere Oberflächenausbildung der Wärmeisolierungen 7c und 7d wird der Luftwiderstand des inneren wärmeisolierenden Luftspaltes 23 zwar größer als im Falle des Luftkanals 51, trotzdem kann der in der Sommerzeit gewünschte intensive Wärmeabzug dadurch gesichert werden, daß die Kunststoffplatte 53 unmittelbar mit dem Luftraum des Innenraums 19 in Kontakt steht. Von der Anwendung der Wärmeisolierungen 7a, 7b, 7c, 7d gemäß Fig. 7 kann gegebenfalls abgewichen werden, z.B. wenn die Außenwand 8 eine wesentlich geringere Wärmeleitfähigkeit aufweist, z.B. wenn diese aus Hohlziegel gefertigt ist und von außen mit einem wärmeisolierenden Putz versehen ist. In diesem Fall ist weder die Wand von innen noch die Kunststoffplatte 41 mit einer weiteren 7a bzw. 7b Wärmeisolierung zu versehen.

In dem Fall, wenn die Tiefe A der in der Erde ausgebildeten Bohrung 49 einen Wert von 500 m erreicht, kann auch ohne Hilfsheizung (zusätzliche Heizkörper) die Heizung der Innenräume 19 des Gebäudes sogar in der kältesten Winterzeit vorgenommen werden, darum ist in diesem Fall die Ausbildung eines inneren wärmeisolierenden Luftspaltes 23 nicht erforderlich, wodurch sowohl die Kunststoffplatte 53 als auch die diese abdeckende Wärmeisolierung 7d wegfallen können.

Der Ausbau des wärmeisolierenden Luftzirkulationssystems 11 kann durch schichtenweises Befestigen der Wärmeisolierungen 7a, 7b, 7c, 7d und der Kunststoffplatten 41, 52, 53 an die Außenwand 8 unter Einfügen der Abstandhalter 25 erfolgen oder auch durch Anwendung von vorgefertigten Elementen, die mit der erforderlichen Wärmeisolierung bereits versehen sind, und den inneren wärmeisolierenden Luftspalt 23, den äußeren wärmeisolierenden Luftspalt 50 und den Luftkanal 51 beinhalten und an Ort und Stelle zusammengefügt und befestigt werden.

Fig. 8 zeigt die Änderungen des in der Heizsaison gemessenen durchschnittlichen Tagesgasverbrauchs eines von innen-außen normal verputzten aus Hohlziegel gebauten mit Dachausbau versehenen Familienhauses mit einem Wohnraum von 560 m³ in Abhängigkeit von der Außentemperatur. Dabei zeigt die Kurve 42 denjenigen Gasvergrauch, der ohne Anwendung der erfindungsgemäßen Vorrichtung meßbar ist. Das Diagramm zeigt, daß der von der Außentemperatur abhängige durchschnittliche Tagesgasverbrauch nach Kurve 42 um cca. 35 % durch Einbau eines äußeren wärmeisolierenden Luftspaltes 50 verringert werden kann. Das Maß der Verringerung zeigt die Kurve 43, die für den bei Verwendung des äußeren wärmeisolierenden Luftspaltes 50 meßbaren durchschnittlichen Tagesgasverbrauch kennzeichnend ist. Durch Ausbau des Luftkanals 51 und des inneren wärmeisolierenden Luftspaltes 23 kann der Tagesverbrauch um weitere 25-27 % verringert werden. Diese Verringerung zeigt die für den durchschnittlichen Tagesgasverbrauch charakteristische Kurve 44. Infolge des Durchströmens der mittels geothermischer Energie erwärmten Luft durch den Luftkanal 51 kann eine weitere 40%-ige Verringerung des Gasverbrauchs erreicht werden, was die für den durchschnittlichen Tagesgasverbrauch charakteristische Kurve 45 veranschaulicht. Bei Verwendung eines wärmeisolierenden Luftzirkulationssystems 11 besteht auch noch die Möglichkeit der sparenden Anwendung einer Zusatzheizung, mit welcher das Maß des Tagesgasverbrauchs im Durchschnitt um weitere 50 % verringert werden kann. Bei Anwendung des wärmeisolierenden Luftzirkulationssystems besteht nämlich die Möglichkeit, mit der Zusatzheizung auch zu sparen. Das kann dadurch erreicht werden, daß in den Räumen, wo sich niemand aufhält, die zusätzliche Heizung ausgeschaltet wird, bzw. nur in denjenigen Räumen eine zusätzliche Heizung verwendet wird, wo sich gerade jemand aufhält. Da bei dieser Lösung die von den zusätzlichen Heizkörpern an den aufzuheizenden Raum zur Neuaufheizung abzugebende Wärmemenge verhältnismäßig gering ist, kann die Aufheizung innerhalb kurzer Zeit erfolgen. Außerdem geht bei der Aufheizung gegenüber den herkömmlichen Heizsystemen die durch das Ausschalten der zusätzlichen Heizkörper gewonnene Energie bei der Aufheizung der abgekühlten Wände nicht verloren, da sich die Wände wegen der inneren Verkleidung nicht unter 10 °C abkühlen. Die auf diese Weise erreichbare Einsparung ist anhand des Vergleiches der Kurven 46 und 45 gut erkennbar.

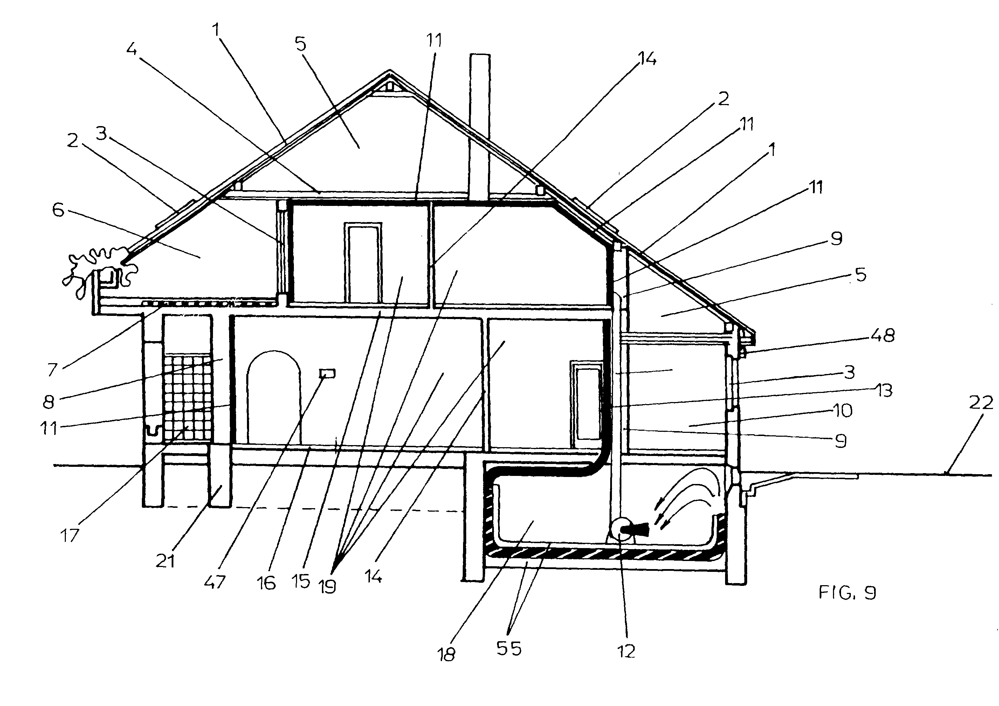

Fig. 9 zeigt ein ebenfalls teilweise unterkellertes Familienhaus mit Dauchausbau, bei dem in der Winterzeit das Heizen bzw. in der Sommerzeit das Kühlen durch das wärmeisolierende Luftzirkulationssystem 11 dadurch gesichert wird, daß die sowohl im Sommer als auch im Winter durch die geothermische Wärmeenergie auf einem Wert von 10°C bis 14 °C gehaltene Temperatur des Innenluftraums des Kellers genutzt wird. Dabei wird die durch das wärmeisolierende Luftzirkulationssystem 11 durchströmende Luft durch einen in der Basis des Kellers eingebauten Wärmetauscher 55 hindurchgeleitet. Der Wärmetauscher 55, der z.B. aus aneinander anschließbaren mit durchgehenden Bohrungen versehenen Betonelementen besteht, kann vorzugsweise auch die unter dem Haus befindlichen Seitenwände des Kellers abdecken, bzw. diejenigen Teile der nach außen zeigenden Kellerseitenwände, die sich unter Berücksichtigung der auf die äußere Erdoberfläche bezogenen Frostgrenze höchstens 1 m unter der Erdoberfläche 22 befinden. Natürlich ist der Wirkungsgrad des Systems umso besser, je größer die Grundfläche des Kellers ist. Wenn die Luftströmungsgeschwindigkeit 1 m³/min beträgt, kann in der Winterzeit die Grundtemperatur der Innenräume 19 ständig auf einen Wert zwischen 8 und 10 °C (in Abhängigkeit von der Grundfläche des Kellers) gehalten werden, wodurch wie aus Fig. 8 ersichtlich ist, auch in den kältesten Wintertagen bei Verwendung der zusätzlichen Heizung mehr als 65 % Erdgas eingespart werden kann. Außerdem ist auch weiterhin die sparende Anwendung der zusätzlichen Heizung möglich, wodurch der Gasverbrauch im Vergleich mit den herkömmlichen Heizsystemen unter 20 % verringert werden kann. Natürlich kann auch bei dieser Lösung in der Sommerzeit die den inneren wärmeisolierenden Luftspalt 23 des wärmeisolierenden Luftzirkulationssystems 11 ausfüllende Luft über den Wärmetauscher 55 geleitet werden und da sich im Keller die Temperatur des Bodens im Sommer nicht über 15 °C erhöht, ist der Wärmetauscher zum Abzug einer gewissen Wärmemenge aus der Mehrwärme der Luft und zur Verringerung der Temperatur der Innenräume 19 im Vergleich mit der Außentemperatur um mindestens 5-7 °C durch die Zirkulation der so abgekühlten Luft fähig. Diese Lösung kann vorzugsweise bei solchen Familienhäusern verwendet werden, die im gewissen Maß unterkellert sind, da bei diesen Häusern die Ausbildung der Bohrung 49 in der Erde wegfallen kann.

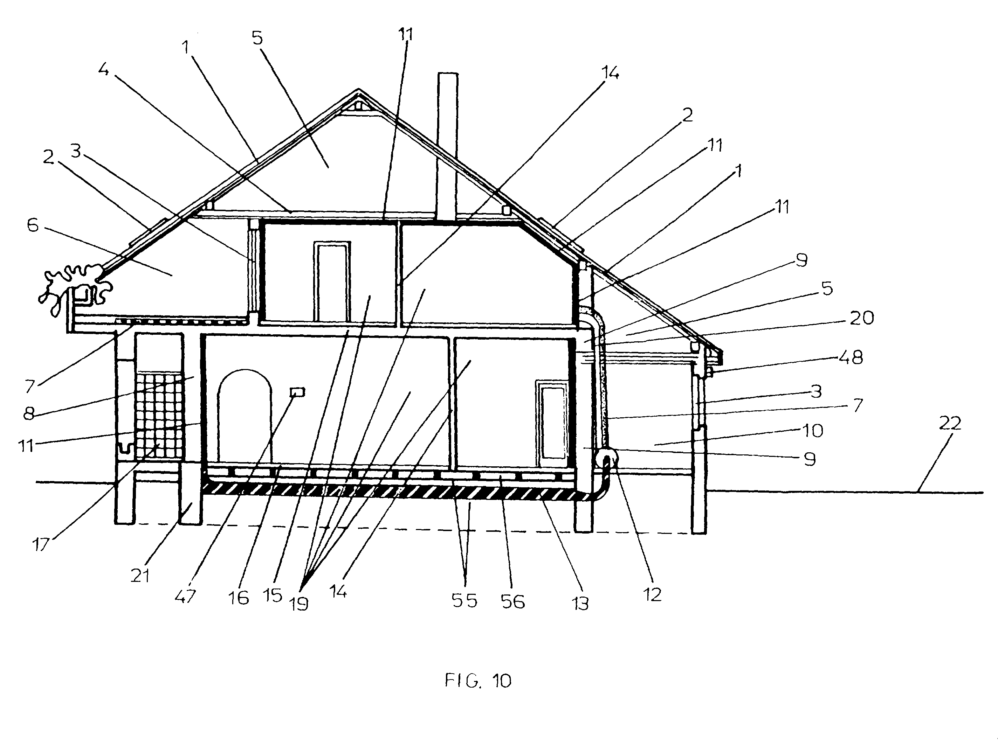

Ein ähnlicher Wirkungsgrad wie bei der Lösung gemäß Fig. 9 kann in dem Fall erreicht werden, wenn das Familienhaus nicht unterkellert ist und deshalb der Wärmetauscher 55 unter dem Boden 16 angeordnet ist. Es ist zweckmäßig über dem Wärmetauscher 55 wärmeisolierende Luftspalte 56 unter dem Boden 16 auszubilden. Dadurch kühlt das System in der Winterzeit weniger den Boden der Innenräume bzw. mit zusätzlicher Heizung kann das Heizen der Erde unter dem Haus verhindert werden, während in der Sommerzeit das System die Wärme nicht in die Innenräume 19 zurückleiten kann (Fig. 10).

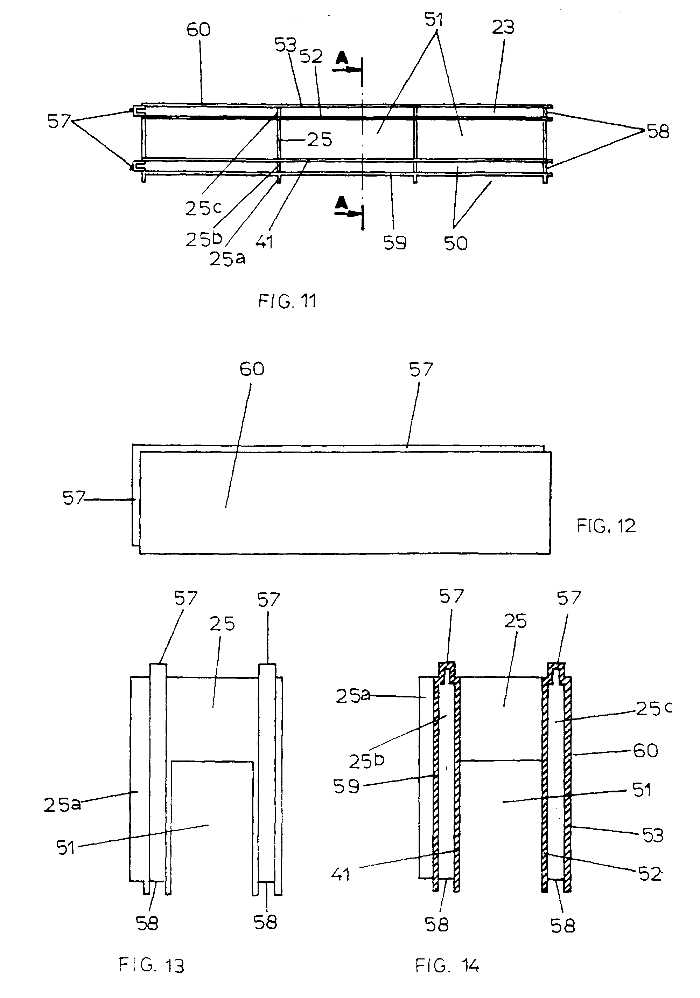

In den Figuren 11-20 ist ein System aus Elementen dargestellt, die aus thermoplastischem Material, z.B. schlagfestem Polystyrol, durch Spritzgießen hergestellt werden können. Die zum Wohnraum zeigende Fläche einer beliebigen Wand kann durch parkettartiges Ineinanderfügen und stellenweises Befestigen der Elemente an der Wand leicht abgedeckt werden. Dadurch erhält die Wand einerseits eine beständige und ästhetische Innenverkleidung, deren sichtbare Oberfläche nachträglich gemalert oder tapeziert werden kann, oder die Stirnfläche der Verkleidungselemente selbst kann bei ihrer Herstellung mit einem räumlichen oder gefärbten Muster z.B. als Holzimitation mit entsprechender Aderausbildung versehen werden. In diesem Fall entfällt der Prozeß des nachträglichen Malerns oder Tapezierens. Andererseits sichert die so ausgebildete Verkleidung eine ausgezeichnete Wärmeisolierung der Wände und in dem in den aus Kunststoff bestehenden Wandverkleidungselementen ausgebildeten Luftkanal besteht die Möglichkeit der Zirkulation der mit geothermischer Energie erwärmten Luft. Die aus parkettartig zusammenfügbaren Elementen bestehende wärmeisolierende Wandverkleidung enthält einen äußeren wärmeisolierenden Luftspalt 50, einen Luftkanal 51 und einen inneren wärmeisolierenden Luftspalt 23, welche von parallelen Kunststoffplatten begrenzt sind. Obwohl diese Wandverkleidung durch Zusammenfügen einer Vielzahl von Elementen ausgebildet wird, kann es trotzdem nicht vorkommen, daß Luft aus dem äußeren wärmeisolierenden Luftspalt 50 in den Luftkanal 51 oder in den inneren wärmeisolierenden Luftspalt 23 strömt, bzw. aus dem inneren wärmeisolierenden Luftspalt 23 sowie dem äußeren wärmeisolierenden Luftspalt 50 erfolgt keine Luftausströmung in den Luftraum der Innenräume. Derartige Luftausströmungen bzw. -einströmungen bzw. -überströmungen würden nämlich einerseits die Wärmeisolationsfähigkeit des Systems verschlechtern, andererseits - da in dem wärmeisolierenden Luftzirkulationssystem Luft aus unterirdischen Schichten zirkuliert - zur Verschmutzung der Innenräume und nach längerer Dauer der Lufteinströmungen zur Ausbildung eines Erdgeruchs führen.

Fig. 11 zeigt die Unteransicht eines mittleren Wandverkleidungselementes 60. Die Stirnseite des Wandverkleidungselementes 60 wird von einer Kunststoffplatte 43 gebildet, während die Kunststoffplatten 52, 53 den inneren wärmeisolierenden Luftspalt 23 begrenzen. Der zur Wand des Gebäudes zeigende und an diese angrenzende äußere wärmeisolierende Luftspalt 50 ist von den Kunststoffplatten 41, 59 begrenzt. Die entsprechende Anordnung der Kunststoffplatten 53, 52, 41, 59 und der Abstand zwischen diesen wird von Abstandhaltern 25 gesichert. Der vollkommene (dichtende) Abschluß und das Aneinanderfügen der aus Kunststoff bestehenden mittleren Wandverkleidungselemente 60 wird von Federn 57 bzw. Nuten 58 gesichert. Die Spaltabstände des inneren wärmeisolierenden Luftspaltes 23, des Luftkanals 51 und des äußeren wärmeisolierenden Luftspaltes 50 sowie die Abstandhaltung zwischen dem Wandverkleidungselement 60 und der Außenwand 8 wird von den Abstandhaltern 25c, 25b und 25a gesichert.

Fig. 12 zeigt eine Vorderansicht des mittleren Wandverkleidungselements 60 mit Ausbildung der Feder 57.

Fig. 13 zeigt eine linksseitige Ansicht des Wandverkleidungselementes 60 gemäß Fig. 11. Daraus sind der den Spaltabstand des Luftkanals 51 sichernde Abstandhalter 25, der den Abstand zwischen dem Wandverkleidungselement 60 und der Außenwand 8 sichernde Abstandhalter 25a, die Feder 57 sowie die Nut 58 sowie die Anordnung des Luftkanals 51 gut ersichtlich.

Fig. 14 zeigt den Schnitt eines aus Kunststoff bestehenden mittleren Wandverkleidungselementes 60. In der Figur sind die Anordnung der Kunststoffplatten 53, 52, 41, 59 sowie der Abstandhalter 25, 25a, 25b, 25c bzw. die Ausbildung der Federn 57 und Nuten 58 gut veranschaulicht.

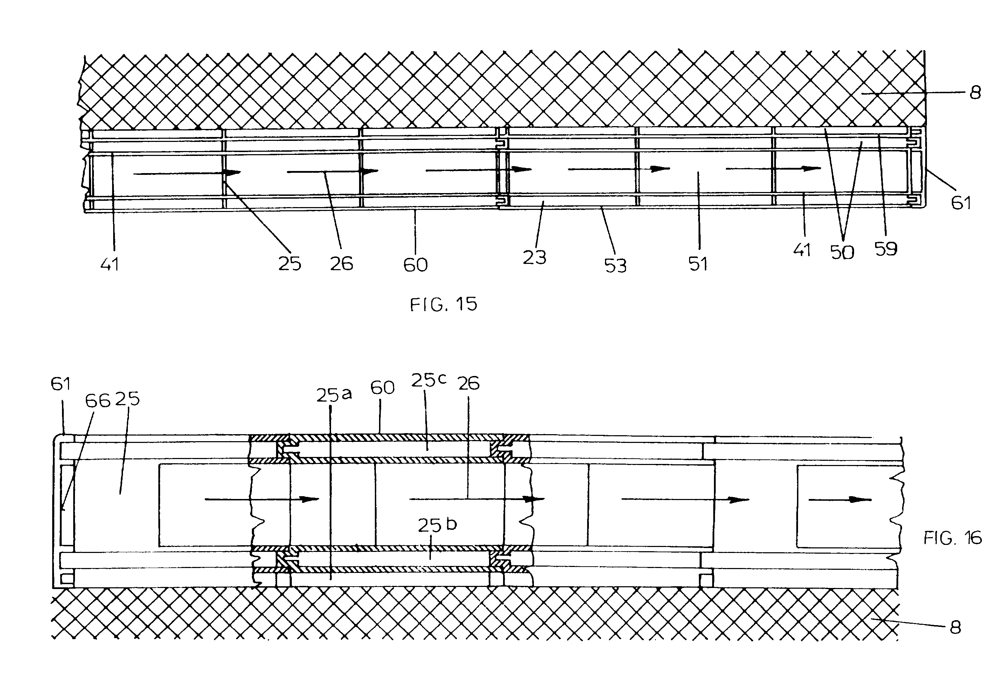

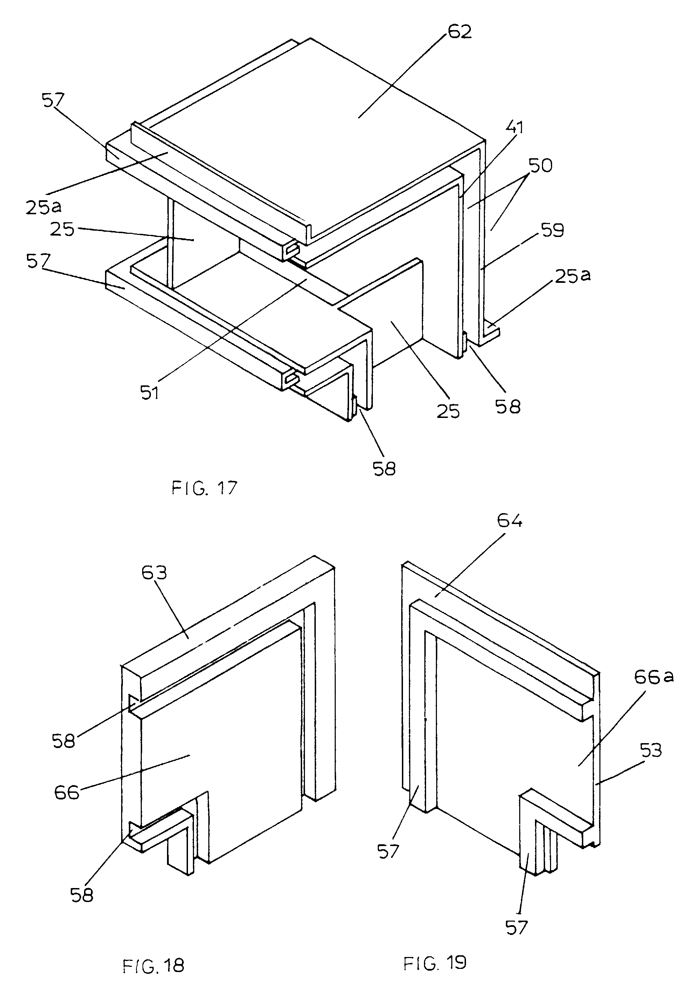

Die Figuren 15 und 16 zeigen die Anordnung der parkettartig aneinander gefügten mittleren Wandverkleidungselemente 60 und des wandverkleidenden Endelements 61 sowie deren Anpassung an die Außenwand 8. In der Figur ist auch der Weg des in dem Luftkanal 51 strömenden Luftstroms 26 und die Anordnung der inneren wärmeisolierenden Luftspalte 23 sowie der äußeren wärmeisolierenden Luftspalte 50 gezeigt. Der Abschluß des Luftkanals 51 des mittleren Wandverkleidungselementes 60, desweiteren des äußeren wärmeisolierenden Luftspaltes 50 und des inneren wärmeisolierenden Luftspaltes 23 kann mittels des Endelementes 61 gesichert werden. Bei dem Endelement 61 sind in der Abschlußfläche 66 in Rändern, die sich in einem dem Abstand der Kunststoffplatten 53, 52, 41 und 59 entsprechenden Abstand befinden, bei der genuteten Ausbildung Nuten ausgebildet, die sich dem gefederten Teil des mittleren Wandverkleidungselementes 60 anpassen, während bei der gefederten Ausbildung Federn ausgebildet sind, die sich dem genuteten Teil des mittleren Wandverkleidungselementes 60 anpassen.

Fig. 17 zeigt ein aus Kunststoff bestehendes Wandverkleidungseckelement 62, das an der Treffstelle von zwei Wänden angepaßt ist. Bei dem Wandverkleidungseckelement 62 sind die Federn 57, die Nuten 58 und der Luftkanal 51 an die Nuten 58, die Federn 57, sowie den Luftkanal 51 des mittleren Wandverkleidungselementes 60 anpaßbar ausgebildet. Das Wandverkleidungseckelement 62 paßt sich auch diejenigen Stellen an, wo sich Wand und Decke treffen. Bei dem Wandverkleidungseckelement 62 (Fig. 17) sind der Luftkanal 51 sowie der äußere wärmeisolierende Luftspalt 50 und der innere wärmeisolierende Luftspalt 23 in einem Winkel von 90° gebrochen, wobei diese von rechtwinklig ausgebildeten Kunststoffplatten begrenzt sind. Den konstanten Querschnitt des äußeren wärmeisolierenden Luftspaltes 50 sichert die Ausbildung der Feder 57, während der konstante Querschnitt des Luftkanals 51 von den Abstandhaltern 25 gesichert wird. Das Wandverkleidungseckelement 62 ist ähnlich wie das mittlere Wandverkleidungselement 60 so ausgebildet, daß innerhalb eines Elementes gewisse Teile der den äußeren wärmeisolierenden Luftspalt 50 und den inneren wärmeisolierenden Luftspalt 23 begrenzenden Kunststoffwände genutet und gewisse Teile gefedert ausgebildet sind. Bei Anfügen von zwei Elementen aneinander ist zum Beispiel zu sichern, daß der in einer Ecke um 90° gebrochene Luftkanal 51 an der Verbindungsstelle in beiden Elementen kontinuierlich fortgesetzt ist. Das wird dadurch erreicht, daß die den äußeren wärmeisolierenden Luftspalt 50, bzw. den inneren wärmeisolierenden Luftspalt 23 begrenzende Feder 57 genau in die Nut 58, die in dem anderen anzufügenden Element in dem äußeren wärmeisolierenden Luftspalt 50, bzw. inneren wärmeisolierenden Luftspalt 23 ausgebildet ist, einpaßbar ausgebildet ist. Dadurch ist eine kontinuierliche Ausbildung des Luftkanals 51 mit konstantem Durchmesser gesichert. Bei dem Wandverkleidungseckelement 62 sind der Luftkanal 51 sowie der äußere wärmeisolierende Luftspalt 51 und der innere wärmeisolierende Luftspalt 23 mittels luftdichtabschließender Endabschlußelemente 63, 64 auf die Weise abgeschlossen, daß in die in der Abschlußfläche 66 des Endabschlußelementes 63 ausgebildete Nut 58 die Feder 57 des Wandverkleidungseckelementes 62 eingepaßt ist, bzw. daß die aus der Abschlußfläche 66a des Endabschlußelementes 64 herausragende Feder 57 des Endabschlußelementes 64 in die Nut eingreift, welche in dem Wandverkleidungseckelement 62 ausgebildet ist.

In den Figuren 18 und 19 sind ein genutetes aus Kunststoff bestehendes Endabschlußelement 63, welches zum Abdecken desjenigen Eckenbereiches dient, in welchem die Wand und die Decke aufeinandertreffen, sowie ein ebenfalls aus Kunststoff bestehendes gefedertes Endabschlußelement 64, welches zum Abschließen des in Fig. 17 dargestellten Wandverkleidungseckelementes 62 aus Kunststoff dient, veranschaulicht. In dem Fall, wenn sich das Ende der Wand auf der linken Seite des Wandverkleidungseckelementes 62 befindet (s. Fig. 17) sind die Nut 58 des genuteten Endabschlußelementes 63 und die Feder 57 des Wandverkleidungseckelementes 62 aneinander gefügt, während die sich zwischen den Nuten 58 befindende Abschlußfläche 66 des Endabschlußelementes 63 den Luftkanal 51 abschließt. Sollte sich jedoch das Ende der Wand in Bezug auf das Wandverkleidungselement 62 - bei Betrachtung von Fig. 17 - auf der rechten Seite befinden, so sind die Feder 57 des Endabschlußelementes 64 (Fig. 19) und die Nut 58 des Wandverkleidungseckelementes 62 zusammengefügt, während die sich zwischen den Federn 57 befindende Abschlußfläche 66a des Endabschlußelementes 64 den Luftkanal 51 (Fig. 17) abschließt.

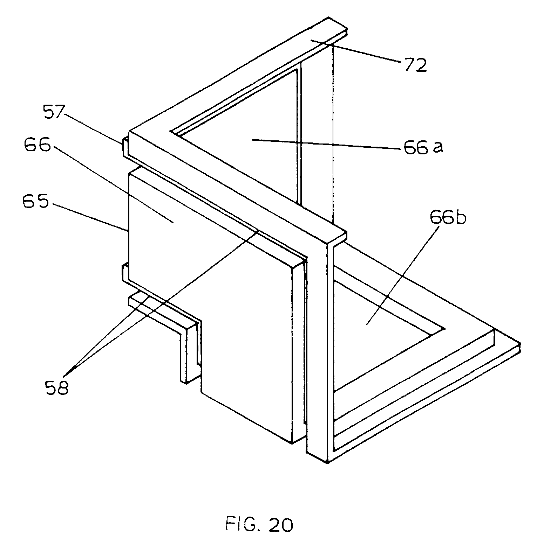

Fig. 20 zeigt ein ebenfalls aus Kunststoff bestehendes wandverkleidendes Eckelement 65, das zum Abdecken der Stelle dient, an welcher zwei Wände und die Decke aufeinanderstoßen. Das Eckelement 65 trifft immer jeweils auf drei Wandverkleidungseckelemente 62, so daß die Federn 57 bzw. Nuten 58 des Eckelementes 65 an die Nuten 58 bzw. Federn 57 des Wandverkleidungseckelementes 62 angepaßt sind und die Abschlußflächen 66 bzw. 66a die in dem Wandverkleidungseckelement 62 ausgebildeten Luftkanäle 51 abschließen. Das Eckelement 65 besteht aus drei zueinander unter einem rechten Winkel angeordneten Abschlußflächen 66, 66a, 66b. Die Abschlußflächen 66 und 66b sind mit einer Nut 58 versehen, deren Ausbildung der Ausbildung des rechtwinklig gebrochene Luftkanals 51 des Wandverkleidungseckelementes 62 folgt. Die Abschlußfläche 66a hat dagegen eine aus der Abschlußfläche herausragende Feder 55 mit ähnlicher Form, wobei die Nut 58 sowie die Feder 57 an die in dem Wandverkleidungseckelement 62 ausgebildete Feder 57 bzw. Nut 58 angepaßt sind. An den Ränden der Abschlußflächen 66a und 66 des Wandverkleidungseckelementes 62 ist eine Verstärkungsrippe 72 ausgebildet, die dazu dient, eine Deformation der Abschlußflächen zu vermeiden.

Eine vollkommene Anpassung der parkettartig ineinander greifenden Elemente kann dadurch erreicht werden, daß entlang von zwei aneinander angeschlossenen Seiten der einzelnen Wandverkleidungselemente (Fig. 11), so über die den äußeren wärmeisolierenden Luftspalt 50 bzw. den inneren wärmeisolierenden Luftspalt 23 begrenzenden rechteckförmigen Kunststoffplatten 41, 59 bzw. Kunststoffplatten 52, 53 hinausragende Federn 57 ausgebildet sind, während entlang der gegenüberliegenden Seiten Nuten 58 ausgebildet sind. Die Federn 57 und die Nuten 58 sind so bemessen, daß jeweils die gefederte Seite eines Elementes an die genutete Seite des anderen Elementes angepaßt werden kann, wobei die Feder 57 genau in die Nut 58 einpaßbar ist, wie das aus den Figuren 15 und 16 ersichtlich ist. Nach diesem System sind die einzelnen Elemente aneinander angepaßt, so z.B. die mittleren Wandverkleidungselemente 60 aneinander, desweiteren die Endelemente 61 an die mittleren Wandverkleidungselemente 60, die Wandverkleidungseckelemente 62 an die mittleren Wandverkleidungselemente 60 oder die Wandverkleidungseckelemente 62 aneinander, usw.

Da die aus Kunststoff bestehenden Wandverkleidungselemente gesägt und geklebt bzw. geschweißt werden können, sind die oben beschriebenen Elemente dazu geeignet, Wandflächen oder Deckenflächen mit beliebiger Abmessung und Ausbildung fachgerecht zu verkleiden. Es besteht natürlich die Möglichkeit, die oben angegebene Produktserie mit weiteren Elementen, z.B. gebogenen Elementen, usw. zu erweitern.

Die Wärmestrahlung der Außenwand des Familienhauses kann dadurch reduziert werden, daß die zur Wand des Innenraumes gerichtete Seite von mindestens der Kunststoffplatte 59 der parkettartig aneinander angepaßten Wandverkleidungselemente mit einer Metallschicht bedeckt ist. Die erwähnte Metallschicht kann im Falle einer Serienproduktion z.B. galvanisch, gegebenenfalls mittels Metallaufdampfen oder durch Auftragen einer Folie usw. ausgebildet werden. Dadurch wird die Wärmeisolierung des Gebäudes weiter verbessert, wodurch die Betriebskosten der Heizung reduziert werden, bzw. in der Sommerzeit die Intensität der Kühlung erhöht werden kann.

Die wesentlichsten Vorteile der erfindungsgemäßen Lösung sind folgende:
- die zum Heizen der Wohnräume verbrauchte Menge an Energieträgern kann bedeutend verringert werden,
- in dem Zeitraum, wenn sich niemand im Wohnhaus aufhält, kann die gesamte Zusatzheizung ohne Gefahr der Einfrierung des Wasserblockes ausgeschaltet werden, wodurch ebenfalls eine bedeutende Energieeinsparung erreicht wird,
- es besteht die Möglichkeit der sparenden - teilweisen - Benutzung der Zusatzheizung, was ebenfalls zu einer bedeutenden Energieeinsparung führt,
- infolge der Verringerung des Energieverbrauchs kann das Maß der bei den herkömmlichen Heizungen auftretenden Luftverschmutzung bedeutend verringert werden,
- mit dem gleichen System kann in der Winterzeit die Heizung bzw. in der Sommerzeit die Kühlung der Wohnung gesichert werden,
- das System enthält keine leicht fehlerhaft werdenden Einrichtungen und beansprucht somit keine regelmäßige Instandhaltung,
- die Serienfertigung ist mit geringem Material- und Einrichtungsaufwand realisierbar,
- die Rückgewinnung der zur Durchführung der Lösung erforderlichen Kosten ist günstig,
- die aus Kunststoff bestehenden parkettartig aneinander anpaßbaren Wandverkleidungselemente ermöglichen die Abdeckung von Wandflächen und Deckenflächen mit ausgezeichneter Wärmeisolierung, wobei die Wandflächen und Deckenflächen auch weiterhin ebene Flächen ohne Rippen bleiben,
- die aus Kunststoff bestehenden parkettartig aneinander anpaßbaren Wandverkleidungselemente ermöglichen einen fachgerechten und ästhetischen Abschluß von Wänden, Endabschnitten usw.

## Patentansprüche

1. Verfahren zum Heizen und Kühlen von Gebäuden, wobei in unterirdischen Schichten vorhandene Wärmeenergie genutzt wird, **dadurch gekennzeichnet,** daß während des Heizens bzw. Kühlens mindestens in dem Luftkanal eines wärmeisolierenden Luftzirkulationssystems (11) - das vorzugsweise mit einem inneren wärmeisolierenden Luftspalt, einem Luftkanal und einem äußeren wärmeisolierenden Luftspalt versehen ist und die die Außenumgebung und andere ungeheizte Räume begrenzenden Wände (8, 9) und Deckenteile (4) des zu heizenden/kühlenden Raumes vom Inneren des Raumes her abdeckt - eine Zirkulation der durch geothermische Wärmeenergie erwärmten und aus den unterirdischen Schichten zugeleiteten Luft erzeugt wird, während die äußere Umgebungstemperatur (tₖ) mittels eines außerhalb des Gebäudes angebrachten Temperaturreglers (48) kontinuierlich erfaßt wird und bei Erfüllung der Bedingung t₁ ≤ tₖ - 1°C - wobei t₁ die Temperatur der im Luftkanal zirkulierenden Luft ist - während des Heizens die Luftzirkulation mit Hilfe des Temperaturreglers (48) unterbrochen wird und eine eventuell erforderliche weitere Aufheizung des Innenraumes (19) auf eine gewünschte Temperatur mit Hilfe von dem Raum vorzugsweise zugeordneten zusätzlichen Heizkörpern gesichert wird, während des Kühlens des Raumes dagegen die Zirkulation der durch geothermische Wärmeenergie auf einem bestimmten Temperaturwert gehaltenen Luft in dem Luftkanal in Gang gesetzt wird, wenn die mittels eines in dem Raum angeordneten Temperaturreglers (47) kontinuierlich erfaßte Temperatur einen bestimmten Wert überschreitet, während die Luftzirkulation unterbrochen wird, wenn die erfaßte Temperatur des Raumes unter einen bestimmten Wert abfällt.

2. Verfahren nach Anspruch 1, **dadurch gekennzeichnet,** daß die durch geothermische Wärmeenergie erwärmte Luft aus einer unter dem Gebäude in der Erde ausgebildeten Bohrung oder aus einem in der Basis des Kellers des Gebäudes oder unter dem Boden des Gebäudes angeordneten Wärmetauscher über ein Saugrohr und Druckrohr in den Luftkanal geleitet wird und zwar beim Heizen über den von dem Boden gemessenen höchstgelegenen Teil des Luftkanals eingeleitet und dessen tiefstgelegenen Teil in das Saugrohr zurückgeleitet wird, während beim Kühlen die Luft über den vom Boden gemessenen tiefstgelegenen Teil des Luftkanals eingeleitet und über dessen höchstgelegenen Teil abgesaugt wird.

3. Verfahren nach Anspruch 1 oder 2, **dadurch gekennzeichnet,** daß beim Kühlen des Raumes in einer Bohrung, deren Tiefe 300 m überschreitet, in einer bestimmten Tiefe vorzugsweise in einer Tiefe von 100-200 m die Richtung der in dem Druckrohr strömenden Luft geändert wird und so die rückströmende Luft erneut in das Saugrohr geleitet wird.

4. Verfahren nach einem der Ansprüche 1 bis 3, **dadurch gekennzeichnet,** daß mittels in den einzelnen Räumen des Gebäudes angeordneter Bewegungssensoren - vorzugsweise Infrabewegungssensoren - das Betreten des jeweiligen Raumes durch eine Person bzw. deren Aufenthalt in dem Raum oder das Verlassen des Raumes erfaßt werden und im Falle des Betretens oder Aufenthaltes über eine Reglereinheit der dem Raum zugeordnete Heizkörper automatisch eingeschaltet wird, bzw. bei Verlassen des Raumes ausgeschaltet wird.

5. Verfahren nach einem der Ansprüche 1 bis 4, **dadurch gekennzeichnet,** daß während des Kühlens des Raumes durch Betätigung eines Umlenkventils der Luftstrom in den inneren wärmeisolierenden Luftspalt des wärmeisolierenden Luftzirkulationssystems geleitet wird.

6. Vorrichtung zum Heizen bzw. Kühlen von Gebäuden, **dadurch gekennzeichnet,** daß die die Außenumgebung begrenzenden Außenwände (8), die ungeheizte Räume und die Außenumgebung begrenzenden Wände und Deckenteile (4) der zu heizenden/kühlenden Räume des Gebäudes auf der zum Innern des jeweiligen Raumes (19) weisenden Seite mit einem wärmeisolierenden Luftzirkulationssystem bedeckt sind, das vorzugsweise aus einer dreifachen Kunststoffplatte (41, 52, 53) besteht und mit einem inneren wärmeisolierenden Luftspalt (23), einem Luftkanal und einem äußeren wärmeisolierenden Luftspalt (50), die aufeinander aufgebaut sind, versehen ist, wobei vorzugsweise der in der Mitte befindliche Luftkanal (51) über ein mit Saugrohr (13) und Druckrohr (20) versehenes Rohrleitungssystem mit einer in der Erde ausgebildeten Bohrung oder einem in der Basis des Kellers des Gebäudes oder unter dem Boden des Gebäudes angeordneten Wärmetauscher - einen zusammenhängenden geschlossenen Raum bildend - verbunden ist, wobei der zusammenhängende geschlossene Raum mit durch geothermische Wärmeenergie aufgewärmtem Gas vorzugsweise Luft gefüllt ist und in dem Rohrleitungssystem mindestens ein Ventilator (12) eingebaut ist, welcher mit einem mindestens in einem geheizten oder gekühlten Innenraum angebrachten - vorzugsweise auch zusätzliche Heizkörper betätigenden - Temperaturregler (47) sowie mit einem außerhalb des Gebäudes angeordneten Temperaturregler (48) in Funktionsverbindung steht.

7. Vorrichtung nach Anspruch 6, **dadurch gekennzeichnet,** daß im Falle einer Außenwand (8) bzw. Decke (4) mit einer den Wert von 0,5 W/m²K überschreitenden Wärmedurchgangszahl zwischen der Außenwand (8) bzw. der Decke (4) und dem äußeren wärmeisolierenden Luftspalt (50) eine vorzugsweise mindestens 5 mm starke Wärmeisolierung (7a) aus gut wärmeisolierendem Material zum Beispiel Polystyrolschaum angeordnet ist, während im Falle einer Außenwand (8) bzw. Decke (4) mit einer den Wert von 1,0 W/m²K überschreitenden Wärmedurchgangszahl auf den zur Außenwand (8) gerichteten Seiten der den äußeren wärmeisolierenden Luftspalt (50) begrenzenden Flächen vorzugsweise eine jeweils mindestens 5 mm starke Wärmeisolierung aus gut wärmeisolierendem Material, zum Beispiel Polystyrolschaum angeordnet ist, desweiteren im Falle einer Bohrung mit einer Tiefe von mehr als 200 m vorzugsweise auf mindestens einer Seite der den inneren wärmeisolierenden Luftspalt (23) begrenzenden Kunststoffplatten (52, 53) eine mindestens jeweils 5 mm starke Wärmeisolierung (7c, 7b) aus gut wärmeisolierendem Material zum Beispiel Polystyrolschaum angeordnet ist.

8. Wärmeisolierende Wandverkleidung insbesondere zur Ausbildung eines wärmeisolierenden Luftzirkulationssystems für eine Vorrichtung nach Anspruch 6 oder 7, wobei diese wärmeisolierende Wandverkleidung aus aneinanderfügbaren Elementen besteht, **dadurch gekennzeichnet,** daß parkettartig aneinander fügbare - vorzugsweise aus Kunststoff bestehende - Wandverkleidungselemente (60) mit der Oberfläche der zu isolierenden Wand angepaßter Form vorgesehen sind, welche mit einem einen zur Luftzirkulation geeigneten Luftkanal (51) bildenden Hohlraum, gegebenfalls mit mindestens einem, zwischen dem Luftkanal (51) und der zu verkleidenden Wand ausgebildeten äußeren Luftspalt (50) sowie gegebenenfalls mit mindestens einem inneren wärmeisolierenden Luftspalt (23), der sich auf der dem äußeren Luftspalt (50) gegenüberliegenden Seite des Luftkanals (51) befindet, versehen sind und an der zu isolierenden Wand vorzugsweise von innen befestigt sind.

9. Wärmeisolierende Wandverkleidung nach Anspruch 8, **dadurch** **gekennzeichnet,** daß die Wandverkleidungselemente (60) über eine Feder (57) - Nut (58) - Verbindung aneinander gefügt sind.

10. Wärmeisolierende Wandverkleidung nach Anspruch 8 oder 9, **dadurch gekennzeichnet,** daß mindestens die zur zu isolierenden Wand gerichtete Seite der aus Kunststoff bestehenden Wandverkleidungselemente (60) mit einer Metallschicht überzogen sind.

## Claims

1. A method for heating and cooling buildings, wherein the heat energy present in subterranean layers is used, characterized in that during heating, or respectively cooling, a circulation of the air heated by geothermal heat energy and brought up from the subterranean layers is generated at least in the air conduit of a heat-insulating air circulation system (11), which preferably is provided with a inner heat-insulating air gap, an air conduit and an outer heat-insulating air gap, and which covers the walls (8, 9) and the ceiling portions (9) of the room to be heated/cooled from the interior of the room and forms the boundaries with the exterior environment and the unheated rooms, while the outside ambient temperature t_{K} is continuously determined by means of a temperature regulator (48) attached to the outside of the building, and that, when the condition t₁ ≤ t_{K} - 1°C, wherein t₁ is the temperature of the air circulating in the air gap, has been met, during heating the air circulation is interrupted with the aid of the temperature regulator (48) and possibly required further heating of the interior room (19) to a desired temperature is assured by means of additional radiators preferably assigned to the room, but during cooling the circulation of the air, which is maintained at a defined temperature by geothermal heating energy, is started in the air conduit when the temperature, which is continuously detected by means of a temperature regulator (47) disposed in the room, exceeds a defined value, while the air circulation is interrupted, when the temperature detected in the room falls below a defined value.

2. The method in accordance with claim 1, characterized in that the air heated by geothermal heat energy is conducted from a bore hole drilled in the ground underneath the building, or from a heat exchanger arranged in the floor of the basement of the building or under the floor of the building, via a suction pipe and a pressure pipe into the air conduit, in fact, when heating it is introduced via the highest portion of the air conduit, measured from the base, and is returned into the suction pipe via its lowest portion, while with cooling the air is introduced via the lowest portion of the air conduit, measured from the base, and is aspirated off via its highest portion.

3. The method in accordance with claim 1 or 2, characterized in that in the course of cooling the room, the direction of the air flowing in the pressure pipe is changed in a bore hole, whose depth exceeds 300 m, at a defined depth, preferably at a depth of 100 to 200 m, and that the air flowing back in this way is again guided into the suction pipe.

4. The method in accordance with one of claims 1 to 3, characterized in that the entry of a person into the respective room, or respectively his stay in the room or his departure from the room is detected by means of movement sensors, preferably infrared movement sensors, arranged in the individual rooms of the building, and in case of an entry or a stay the radiator associated with the room is automatically turned on via a regulating unit, or respectively turned off when the room is vacated.

5. The method in accordance with one of claims 1 to 4, characterized in that in the course of cooling of the room the air flow is directed into the inner heat-insulating air gap of the heat-insulating air circulation system by the operation of a reversing valve.

6. A device for heating, or respectively cooling buildings, characterized in that the outer walls (8) bordering the exterior environment, the walls and ceiling portions (4) of the rooms of the building, which are to be heated/cooled, bordering the unheated rooms and the exterior environment are covered on the sides facing the interior of the respective room (19) with a heat-insulating air circulation system, which preferably consists of a triple plastic panel (41, 52, 53) and is provided with an inner, heat-insulating air gap (23), an air conduit and an outer heat-insulating air gap (50), which are built one on top of the other, wherein preferably the air conduit (51) located in the center is connected via a pipe line system provided with a suction pipe (13) and pressure pipe (20) with a bore hole drilled in the ground, or a heat exchanger arranged in the floor of the basement of the building or under the floor of the building and forming an interconnected closed chamber, wherein the interconnected closed chamber is filled with a gas, preferably air, heated by geothermal heat energy, and at least one fan (12) is installed in the pipe line system, which is functionally connected with at least one temperature regulator (47) arranged in a heated or cooled room, which preferably also actuates additional radiators, as well as with a temperature regulator (48) arranged outside the building.

7. The device in accordance with claim 6, characterized in that in the case of an outer wall (8), or respectively ceiling (4), having a heat transition coefficient which exceeds the value of 0.5 W/m²K, a heat insulation (7a) is arranged between the outer wall (8), or respectively the ceiling (4), and the outer heat-insulating air gap (50), which is preferably at least 5 mm thick and made of a material with good heat insulation properties, for example polystyrene foam, while in the case of an outer wall (8), or respectively a ceiling (4) with a heat transition coefficient exceeding the value of 1.0 W/m²K, a heat insulation is arranged on the sides facing the outer wall (8) of the surfaces bordering the outer heat-insulating air gap (50), which is preferably at least 5 mm thick and made of a material with good heat insulation properties, for example polystyrene foam, furthermore, in case of a bore hole of more than 200 m depth, preferably a heat insulation (7c, 7b) of at least 5 mm thickness and made of a material with good heat insulation properties, for example polystyrene foam, is arranged on at least one side of the plastic panels (52, 53) bordering the inner heat-insulating air gap (23).

8. A heat-insulating wall covering, in particular for producing a heat-insulating air circulation system for a device in accordance with claim 6 or 7, wherein this heat-insulating wall covering consists of elements which can be attached to each other, characterized in that wall covering elements (60), which can be attached to each other in a parquet-like manner, preferably consist of plastic, have a shape which is matched to the surface of the wall to be insulated and which are provided with a hollow chamber forming an air conduit (51) which is suitable for air circulation, possibly with at least one outer air gap (50) formed between the air conduit (51) and the wall to be covered and possibly with at least one inner heat-insulating air gap (23) located on the side of the air conduit (51) opposite the outer air gap (50), and which are preferably fastened from the inside on the wall to be insulated.

9. The heat-insulating wall covering in accordance with claim 8, characterized in that the wall covering elements (60) are attached to each other via a tongue (57)-and-groove (58) connection.

10. The heat-insulating wall covering in accordance with claim 8 or 9, characterized in that at least the side of the wall covering elements (60) made of plastic which is facing the wall to be insulated is covered by a metal layer.

## Revendications

1. Procédé pour le chauffage et le refroidissement de bâtiments en utilisant de l'énergie thermique présente dans des couches souterraines, caractérisé en ce que pendant le chauffage ou le refroidissement, une circulation de l'air chauffé par de l'énergie géothermique et amené des couches souterraines est générée au moins dans le conduit d'air d'un système de circulation d'air (11) thermiquement isolant - système qui est, de préférence, pourvu d'une fente d'air intérieure thermiquement isolante, d'un conduit d'air et d'une fente d'air extérieure thermiquement isolante, et qui recouvre, de l'intérieur de la pièce devant être chauffée/refroidie, des murs (8, 9) et parties de plafond (4) de cette pièce qui délimitent l'environnement extérieur et d'autres pièces non chauffées - tandis que la température ambiante extérieure (tₖ) est détectée continuellement au moyen d'un régulateur de température (48) disposé à l'extérieur du bâtiment, et lorsque la condition t₁≤tₖ-1°C est satisfaite -t₁ étant la température de l'air circulant dans le conduit d'air- pendant le chauffage, la circulation d'air est interrompue à l'aide du régulateur de température (48), et un chauffage de la pièce intérieure (19) éventuellement nécessaire à une température souhaitée continue à être assuré à l'aide de radiateurs supplémentaires de préférence associés à la pièce, tandis qu'en revanche, pendant le refroidissement de la pièce, la circulation de l'air qui est maintenu à une valeur de température déterminée par de l'énergie géothermique et qui se trouve dans le conduit d'air, est démarrée, lorsque la température détectée continuellement à l'aide d'un régulateur de température (47) qui est disposé dans la pièce franchit une valeur prédéterminée, tandis que la circulation d'air est interrompue lorsque la température détectée de la pièce tombe au-dessous d'une valeur déterminée.

2. Procédé selon la revendication 1, caractérisé en ce que l'air réchauffé par de l'énergie géothermique est introduit dans le conduit d'air à travers un tuyau d'aspiration et un tuyau de refoulement à partir d'un alésage ménagé dans la terre au-dessous du bâtiment ou à partir d'un échangeur de chaleur disposé dans la base de la cave du bâtiment ou disposé au-dessous du sol du bâtiment, cet air, lors du chauffage, étant introduit par la partie du conduit d'air située le plus haut, mesurée à partir du sol, et étant refoulé par la partie située le plus bas de celui-ci dans le tuyau d'aspiration, tandis que lors du refroidissement, l'air est introduit par la partie du conduit d'air située le plus bas, mesurée à partir du sol, et est aspiré par la partie située le plus haut de celui-ci.

3. Procédé selon la revendication 1 ou 2, caractérisé en ce que lors du refroidissement de la pièce dans le cas d'un perçage, dont la profondeur est supérieure à 300 m, la direction de l'air circulant dans le tuyau de refoulement est modifiée à une profondeur déterminée, de préférence à une profondeur de 100 à 200 m, et ainsi l'air refoulé est de nouveau introduit dans le tuyau d'aspiration.

4. Procédé selon l'une des revendications 1 à 3, caractérisé en ce que l'entrée d'une personne dans la pièce considérée ou le séjour de celle-ci dans la pièce ou la sortie de celle-ci de la pièce sont détectés au moyen de capteurs de mouvement -de préférence de capteurs de mouvement à infrarouge- disposés dans les pièces individuelles du bâtiment, et dans le cas d'entrée ou de séjour le radiateur associé à la pièce est mis en marche automatiquement par une unité de réglage, et est éteint automatiquement lors de la sortie de la chambre.

5. Procédé selon l'une des revendications 1 à 4, caractérisé en ce que pendant le refroidissement de la pièce, le courant d'air est introduit dans la fente d'air intérieure thermiquement isolante du système de circulation d'air thermiquement isolant par l'actionnement d'une vanne de déviation.

6. Dispositif pour le chauffage et le refroidissement de bâtiments, caractérisé en ce que les murs extérieurs (8) délimitant l'environnement extérieur, les murs et parties de plafond (4) délimitant les pièces non chauffées et l'environnement extérieur des pièces du bâtiment devant être chauffées/refroidies sont recouverts d'un système de circulation d'air thermiquement isolant sur le côté dirigé vers l'intérieur de la pièce considérée (19), système qui est constitué de préférence d'une plaque en matière plastique triple (41,52,53), et qui est pourvu d'une fente d'air intérieure thermiquement isolante (23), d'un conduit d'air et d'une fente d'air extérieure thermiquement isolante (50) superposés, le conduit d'air (51) se trouvant de préférence au milieu étant relié par l'intermédiaire d'une tuyauterie pourvue d'un tuyau d'aspiration (13) et d'un tuyau de refoulement (20) à un perçage formé dans la terre ou à un échangeur de chaleur disposé dans la base de la cave du bâtiment ou sous le sol du bâtiment -formant un espace fermé et communiquant- l'espace fermé et communiquant étant rempli d'un gaz réchauffé par de l'énergie géothermique, de préférence de l'air, et au moins un ventilateur (12) étant installé dans le système de tuyauterie, ventilateur qui est en relation fonctionnelle avec un régulateur de température (47) disposé dans au moins une pièce intérieure chauffée ou refroidie -de préférence actionnant également des radiateurs supplémentaires- ainsi qu'avec un régulateur de température (48) disposé à l'extérieur du bâtiment.

7. Dispositif selon la revendication 6, caractérisé en ce que dans le cas d'un mur extérieur (8) ou d'un plafond (4) ayant un coefficient global de passage de chaleur excédant la valeur de 0,5 W/m² K, une isolation thermique (7a) en matériau bon isolateur thermique, par exemple en mousse de polystyrène, de préférence ayant une épaisseur d'au moins 5 mm, est disposée entre le mur extérieur (8) ou le plafond (4) et la fente d'air extérieure thermiquement isolante (50), tandis que dans le cas d'un mur extérieur (8) ou d'un plafond (4) ayant un coefficient global de passage de chaleur excédant une valeur de 1,0 W/m² K, une isolation thermique en un matériau bon isolateur thermique, par exemple en mousse de polystyrène, de préférence ayant une épaisseur d'au moins 5 mm, est disposée sur les côtés dirigés vers le mur extérieur (8) des faces délimitant la fente d'air extérieure thermiquement isolante (50), et en outre, dans le cas d'un perçage ayant une profondeur de plus de 200 m, une isolation thermique (7c,7b) en un matériau bon isolateur thermique, par exemple en mousse de polystyrène, ayant une épaisseur d'au moins 5 mm, est disposée de préférence sur au moins un côté des plaques en matière plastique (52,53) délimitant la fente d'air intérieure thermiquement isolante (23).

8. Revêtement de mur thermiquement isolant, notamment pour la formation d'un système de circulation d'air thermiquement isolant pour un dispositif selon la revendication 6 ou 7, ce revêtement de mur thermiquement isolant étant constitué d'éléments pouvant être joints, caractérisé en ce qu'il est prévu des éléments de revêtement de mur (60) -de préférence en matière plastique- pouvant être joints à la façon d'un parquet et ayant une forme adaptée à la surface du mur devant être isolé, ces éléments étant pourvus d'un espace creux formant un conduit d'air (51) approprié à la circulation d'air, le cas échéant comprenant au moins une fente d'air extérieure (50) formée entre le conduit d'air (51) et le mur devant être revêtu, et le cas échéant comprenant au moins une fente d'air intérieure thermiquement isolante (23) qui se trouve sur le côté du conduit d'air (51) opposé à la fente d'air extérieure (50), et ces éléments étant fixés sur le mur devant être isolé, de préférence de l'intérieur.

9. Revêtement de mur thermiquement isolant selon la revendication 8, caractérisé en ce que les éléments de revêtement de mur (60) sont joints les uns aux autres par une liaison languette (57) et rainure (58).

10. Revêtement de mur thermiquement isolant selon la revendication 8 ou 9, caractérisé en ce qu'au moins le côté des éléments de revêtement de mur (60) en matière plastique dirigé vers le mur devant être isolé est revêtu d'une couche métallique.
